# EUROPÄISCHE PATENTSCHRIFT

(11) **EP 3 437 832 B1**
(45) Veröffentlichungstag und Bekanntmachung des Hinweises auf die Patenterteilung: **10.07.2019**
(21) Anmeldenummer: 18184391.3
(22) Anmeldetag: 19.07.2018
(51) Int. Cl.: B29C 55/20, B29C 55/16

(54) **RECKANLAGE**
STRETCHING DEVICE
INSTALLATION D'ÉTIRAGE

(30) Priorität: 01.08.2017 DE 102017117420
(43) Veröffentlichungstag der Anmeldung: 06.02.2019
(73) Patentinhaber: Brückner Maschinenbau GmbH & Co. KG, 83313 Siegsdorf (DE)
(72) Erfinder: UNTERREINER, Markus, 83250 Marquartstein (DE); GIAPOULIS, Anthimos, 83278 Traunstein (DE); BAUER, Michael, 83123 Amerang (DE); ROTT, Thomas, 83313 Siegsdorf (DE); JUNG, Oliver, 42477 Radevormwald (DE)
(74) Vertreter: Flach Bauer Stahl Patentanwälte Partnerschaft mbB

(56) Entgegenhaltungen:
- EP-A1- 2 629 960
- WO-A1-2014/094803
- DE-A1-102008 059 548

## Beschreibung

Die Erfindung betrifft eine Reckanlage in Form einer sequentiellen Reckanlage oder in Form einer Querreckanlage nach dem Oberbegriff des Anspruches 1.

Reckanlagen finden insbesondere bei der Kunststofffolienherstellung Anwendung. Neben sogenannten Simultanreckanlagen, in welchen der Kunststofffilm gleichzeitig in Quer- und Längsrichtung gereckt werden, sind vor allem sogenannte sequentielle Reckanlagen bekannt, bei denen ein Kunststofffilm in zwei aufeinanderfolgenden Stufen gereckt wird, beispielsweise zunächst in Längsrichtung und dann in Querrichtung (oder umgekehrt)um so eine Kunststofffolie zu erzeugen.

Die zu reckende Materialbahn, in der Regel also ein Kunststofffilm, wird mittels einer Klemmvorrichtung, sogenannte Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zur einer Auslaufzone und dann auf dem Rückweg wieder zur Einlaufzone verfahren, wobei die Folie in der Auslaufzone beispielsweise einer gewissen Relaxation und/oder Wärmenachbehandlung unterzogen werden kann.

Die eingangs erwähnten Sequentiellen oder Querreckanlagen umfassen üblicherweise zwei symmetrisch zu einer vertikalen Symmetrieebene angeordnete Führungsbahnen, wobei jede Führungsbahn eine teilweise oder ganz umlaufende Führungsschiene umfasst, längs derer sogenannte Kluppenglieder oder Kluppenwagen verfahren bzw. bewegt werden.

Die Kluppen werden also dabei zum Längsbewegen der Materialbahn, insbesondere des zu reckenden Films benötigt. Die Kluppen oder Kluppenwagen sind in der Regel an umlaufenden Ketten (Endlosketten) befestigt, die an beiden Seiten der zu reckenden Materialbahn auf den erwähnten umlaufenden Führungsbahnen verfahrbar angeordnet sind. In der eigentlichen Reckzone verlaufen die Führungsbahnen auf divergierenden Wegen, so dass der Seitenabstand zwischen den auf den beiden seitlichen umlaufenden Bahnen verfahrbaren Kluppen zunimmt. Dabei wird der Film in Querrichtung gereckt.

Bei einigen Filmtypen ist es für die Erzielung unterschiedlicher Eigenschaften nötig, die verstreckte Folie, egal ob sie monoaxial oder biaxial sequentiell verstreckt wurde, zu relaxieren. Eine Relaxierung in Querrichtung zur Folienabzugsrichtung (sogenannte TD-Richtung - Transversal Direction) ist hinlänglich bekannt und kann durch die Einstellung der Arbeitsbreite der Reckanlage erreicht werden, indem beispielsweise die Arbeitsbreite nach dem Verstrecken des Films verringert wird.

Da die Folie entlang des Verlaufs in der Reckanlage durchgehend von den Kluppen oder sogenannten Messerklappen gehalten wird und der Abstand der Kluppen konstant ist, da die Kluppen mit Kettengliedern verbunden sind und diese keine Längenänderung in Kettenlängsrichtung zulassen, ist eine Relaxierung in Abzugsrichtung des Films, d.h. in der sogenannten Maschinenrichtung (MD-Richtung - Machine Direction) nicht oder nur durch zusätzlichen Maßnahmen möglich.

Dazu ist bereits in der EP 2 629 960 B1, der EP 2 629 959 B1 oder der EP 2 570 253 B1 vorgeschlagen worden, bei einer Querreckanlage zum Antrieb der Kluppen links und rechts des zu reckenden Filmes zwei Endlosketten zu verwenden, wobei jede Endloskette abwechselnd Kettenglieder eines ersten Typs und Kettenglieder eines zweiten Typs umfasst. An jedem zweiten Bolzen der Kettenglieder ist eine Kluppe oder ein Kluppenkörper befestigt. Die Kettenglieder umfassen Laufrollen, mit denen sie auf einer Führungsschiene abrollen.

Neben der Führungsschiene ist aber auch noch auf einem Teil der umlaufenden Führungsbahn eine Steuerschiene vorgesehen, die über die Führungsschiene in Richtung der Kette übersteht. Die Kettenglieder ersten und zweiten Typs sind dabei unterschiedlich ausgestaltet, wobei jedes Kettenglied des ersten Typs eine Rolle aufweist, die in Richtung der entsprechenden Führungsschiene übersteht, um auf die Steuerschiene auflaufen zu können. Dadurch wird die Kette in ihrer Erstreckungslage verformt, wobei die einzelnen Kettenglieder gegenüber ihrer maximalen Erstreckung an den Angriffspunkten eine zumindest leicht winklige Lage zueinander einnehmen, wodurch der Abstand zur benachbarten Kluppe abnimmt.

Dadurch kann also beispielsweise in einer Relaxierungszone eine Relaxierung (Entspannung) des Kunststofffilms um einige Prozent durchgeführt werden.

Insoweit ähnliche Lösungen zur Verringerung des Abstandes zwischen zwei in Abzugsrichtung benachbart zueinander liegenden Kluppen unter Verwendung einer zusätzlichen Steuerschiene neben einer Führungsschiene ist beispielsweise auch noch aus der CN 203543104 U oder der US 9,073,257 B2 bekannt.

Demgegenüber ist es Aufgabe der vorliegenden Erfindung eine verbesserte Querreck- oder Sequentielle Reckanlage mit einer Querreckstufe zu schaffen, um den Abstand zwischen zwei in Umlaufrichtung benachbart zueinander liegenden Kluppen verändern zu können.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Im Rahmen der vorliegenden Erfindung wird eine völlig neue Lösung vorgeschlagen, mit der beispielsweise eine Abstandsveränderung zwischen zwei aufeinanderfolgenden Kluppen, beispielsweise zur Durchführung einer Relaxierung eines Kunststofffilms und/oder auch zu einer Veränderung der Kettenspannung, durchgeführt werden kann.

Das Grundprinzip der Erfindung basiert darauf, dass einige der Kluppen (in der Regel im Ofen, durch den die Transporteinrichtung hindurchbewegt wird) in den Bereichen, in denen eine Abstandsverkürzung zwischen zwei aufeinanderfolgenden Kluppen bewirkt werden soll, mittels einer Steuerschiene in Querrichtung quer zur Führungsbahn lageverändert werden.

Da diese nachfolgend auch als Steuerkluppen bezeichneten Kluppen gegenüber einer benachbarten quer zur Führungsbahn nicht verstellbaren Kluppe, die nachfolgend auch als Führungskluppe bezeichnet wird, zumindest über ein Verbindungsglied direkt oder mittelbar verbunden sind, wird durch die Querbewegung der sogenannten Steuerkluppe quer zur Vorschubrichtung aller Kluppen das Verbindungsglied verschwenkt, wodurch eine Abstandsverkürzung zwischen einer Führungs- und einer Steuerkluppe und damit zwischen zwei aufeinanderfolgenden Führungskluppen bewirkt wird.

Die Querbewegung der Steuerkluppe kann dabei entweder in Richtung des zu reckenden Kunststofffilms oder von diesem weg erfolgen. In beiden Fällen ist bevorzugt vorgesehen, dass die betreffende, in ihrer Lage zur Vorschubbewegung mit einer Querkomponente verstellte Steuerkluppe auskluppt, d.h. die Kluppe oder Messerklappe geöffnet wird, damit die Kluppe den Folienrand nicht mehr hält.

Dabei lässt sich die Erfindung beispielsweise dadurch realisieren, dass die einzelnen Kluppen und insbesondere auch eine Führungskluppe mit einer auf sie folgenden Steuerkluppe über ein Verbindungsglied verschwenkbar verbunden sind, nämlich beispielsweise durch ein einzelnes Kettenglied oder ein kettenähnliches Verbindungsglied. Möglich ist aber auch, dass eine durchgängige Kette (Endloskette) verwendet wird, die gleiche oder unterschiedliche Kettenglieder in regelmäßiger Folge aufweisen kann, wobei ein als Führungsglied bezeichnetes Kettenglied dann mit der Führungskluppe und ein als Steuerkettenglied bezeichnetes Kettenglied mit der Steuerkluppe verbunden ist, wobei zwischen dem Führungskluppen-Kettenglied und dem Steuerkluppen-Kettenglied ein Verbindungs-Kettenglied vorgesehen ist.

Die Erfindung kann vereinfacht auch als "Trapez-Lösung" bezeichnet werden, da bei der Verstellbewegung der Steuerkluppen durch deren zusätzliche Querbewegungen bevorzugt zu den jeweils benachbarten Führungskluppen jeweils zumindest zwei in Umlaufrichtung versetzt liegende und ein Laufrollenpaar bildende Laufrollen in Draufsicht auf in Querrichtung versetzt liegende Laufflächen einer sogenannten Steuerschiene abrollen und dazwischen jeweils das schräg gestellte Verbindungsglied verläuft, so dass sich eine trapezförmige Anordnung oder Lage der Achsen der Laufrollen an den Führungs- und Steuerkluppen ergibt.

Bevorzugt werden Führungskluppen und Steuerkluppen abwechselnd vorgesehen, so dass beispielsweise jede zweite Kluppe eine Steuerkluppe ist, die zur Abstandsverkürzung zweier aufeinanderfolgender Führungskluppen quer zur Antriebsrichtung ausgelenkt oder verstellt werden kann.

Es sind aber auch beliebige andere Abfolgen möglich, wodurch sich eine große Variationsbreite zur Abstandsveränderung zwischen zwei benachbarten Kluppen und/oder zur Bewirkung einer Kettenspannung unter Verkürzung der Gesamtlänge einer entsprechenden Kettenanordnung einstellen zu können.

Um die Abstandsveränderung zwischen einer Führungs- und einer Steuerkluppe und damit eine sogenannte Teilungsverkürzung durchzuführen, kann an den gewünschten Stellen auf der Führungsbahn neben der Führungsschiene eine in diesen Bereichen wirksame Steuerschiene fest vorgesehen sein, die üblicherweise mit einer auflaufenden und einer ablaufenden Rampe versehen ist, worüber in Abhängigkeit der Umlaufgeschwindigkeit die Verstellung der Steuerkluppen quer zur Umlaufrichtung bewirkt wird.

In einer bevorzugten Ausführungsform der Erfindung ist die Steuerschiene zumindest veränderlich einstellbar, wobei in einer besonders bevorzugten Variante diese Verstellung manuell oder motorisch durchführbar ist, gegebenenfalls sogar während des laufenden Betriebs.

Werden die Steuerkluppen vom Film weg in Querrichtung zur Vorschubbewegung ausgelenkt (verstellt), so ist in der Regel vorgesehen, dass diese Steuerkluppe zu Beginn der Querverstellbewegung auskluppt, also den Folienrand des Filmes frei gibt.

Wird eine entsprechende Steuerkluppe in Richtung des Kunststofffilms quer verstellt, kann ein Öffnen der Messerklappe und damit ein Freigeben des Filmrands auch nach Beginn der Querverstellbewegung zu einem späteren Zeitpunkt vorgenommen oder im Extremfall sogar darauf verzichtet werden.

Aus der Erläuterung ergibt sich also, dass die Steuerkluppen beispielsweise beim rampenförmigen Auflaufen auf die zur Führungsschiene versetzt liegende Steuerschiene auskluppen und sich deren Klemmeinrichtungen öffnen, also in Freigabestellung verstellt werden, um den Filmrand frei zu geben, während benachbarte Führungskluppen den Filmrand weiterhin festhalten um den Film durch die Reckanlage weiterhin hindurch zu bewegen. Dass Öffnen der Klemm- oder Kluppeneinrichtungen auf den Steuerkluppen kann aber auch gegebenenfalls schon vor Erreichen der Steuerschiene, während des Auflaufens auf die rampenförmigen Abschnitte der Steuerschiene oder aber auch erst zu einem späteren Zeitpunkt durchgeführt werden, wenn die Steuerkluppen bereits voll auf die Steuerschiene aufgelaufen sind, die üblicherweise, abgesehen von den rampenförmigen Ausbildungen, am Anfang und am Ende der Steuerschiene mehr oder weniger parallel zu den Führungsschienen und deren Laufflächen verlaufen.

Zum selektiven Öffnen der Steuerkluppen können unterschiedliche Maßnahmen vorgesehen sein. Beispielsweise ist es möglich, die Messerklappen der Steuerkluppen länger auszugestalten, damit sie über das Höhenniveau der Messerklappen der Führungskluppen überstehen, so dass dann eine selektive Öffnung auf mechanische und/oder magnetische Weise nur für die Steuerkluppen durchgeführt werden kann.

Bevorzugt wird dazu ein Öffnerrad verwendet, um selektiv lediglich die Steuerkluppen aber nicht die Führungskluppen zu öffnen.

Ganz allgemein eröffnet die Erfindung die Möglichkeit, dass beispielsweise mittels des erwähnten Öffnerrades aufgrund seiner spezifischen Ausgestaltung nur jede zweite oder jede x-te Messerklappe betätigt wird. Alternativ wäre es auch denkbar, dass jede zweite oder jede x-te Messerklappe magnetisch wäre und ein Magnet zum Öffnen vorhanden wäre.

Derartige Öffnungseinrichtungen können an beliebiger Stelle der Reckanlage positioniert werden.

Weitere Vorteile, Einzelheiten und Merkmale der Erfindung ergeben sich aus den nachfolgend erörterten Ausführungsbeispielen. Dabei zeigen im Einzelnen:
- Figur 1:: eine schematische Draufsicht auf eine Querreckanlage oder Querreckstufe;
- Figur 2:: eine räumliche Darstellung einer Führungskluppe und einer Steuerkluppe;
- Figur 3:: eine Seitenansicht einer Führungskluppe senkrecht durch den Querschnitt einer Führungsschiene;
- Figur 4:: eine Seitendarstellung einer Steuerkluppe bei einem senkrechten Schnitt durch die Führungsschiene;
- Figur 5:: eine rückwärtige Ansicht eines ersten Ausführungsbeispiels mit Führungs- und Steuerkluppen, die durch voneinander getrennte einzelne Verbindungsglieder miteinander verbunden sind;
- Figur 6:: eine horizontale Schnittdarstellung längs der Linie VI-VI in Figur 5;
- Figur 7a:: eine rückwärtige Darstellung eines abgewandelten Ausführungsbeispiels unter Verwendung einer Endloskette, ähnlich zu dem Ausführungsbeispiel nach Figur 5;
- Figur 7b:: eine horizontale Schnittdarstellung gemäß der Linie VIIb-VIIb in Figur 7a;
- Figur 8:: eine schematische Draufsicht auf aufeinanderfolgende Kluppen, die längs einer ersten Teilstrecke auf einer Führungsschiene verfahren werden;
- Figur 9:: eine entsprechende Darstellung zu Figur 8, bei der die Führungskluppen weiterhin auf der Führungsschiene und die Steuerkluppe längs einer dazu versetzt liegenden Steuerschiene verfahren werden, wodurch der Seitenabstand zwischen zwei Führungskluppen verringert wird;
- Figur 9a:: eine entsprechende Darstellung zu Figur 9, bei der jedoch die Führungskluppen als auch die Steuerkluppen, die auf einer zu den Führungskluppen versetzt liegenden Steuerschiene verfahren werden, auch im Bereich einer zweiten Teilstrecke weiterhin in ihrer Klemm- und Schließposition verbleiben und nicht geöffnet werden;
- Figur 10:: eine zu Figur 9 vergleichbare Darstellung zur Verdeutlichung der Trapez-Konfiguration bezüglich jeweils eines Rollenpaars an einer Führungskluppe und eines nachfolgenden Rollenpaars an einer Steuerkluppe;
- Figur 11a:: eine schematische Seitendarstellung bei einem senkrechten Schnitt durch die Führungsschiene zur Verdeutlichung der auf die Steuerkluppe einwirkenden Kräfte;
- Figur 11b:: eine entsprechende Darstellung zu Figur 11a, wenn eine entsprechende Steuerkluppe auf eine zur Führungsschiene beabstandete Steuerschiene aufgefahren ist;
- Figur 12:: ein abgewandeltes Ausführungsbeispiel, bei welchem die Führungskluppen und die Steuerkluppen zu dem vorausgegangenen Ausführungsbeispiel mit vertauschter Wirkung vorgesehen sind;
- Figur 13:: eine zu Figur 12 entsprechende Darstellung, bei der allerdings die Führungskluppen nunmehr auf der Führungsschiene und die Steuerkluppen auf der Steuerschiene abgestützt verfahren werden, wobei die Steuerschiene im Gegensatz zu den vorausgegangenen Ausführungsbeispielen auf der zum Film abgewandt liegenden Seite der Führungsschiene vorzugsweise parallel dazu verläuft;
- Figur 14a:: eine schematische auszugsweise Darstellung eines Filmabschnittes mit einem zugehörigen Filmrand und den dort ansetzenden Kluppen, wodurch aufgrund der im Film wirkenden Kräfte Einsprünge am Filmrand erzeugt werden, und zwar in einem Zustand, bei der sowohl die Klemmeinrichtung der Führungskluppen als auch die Klemmeinrichtung der Steuerkluppen den Filmrand eingeklemmt halten;
- Figur 14b:: eine vergleichbare Darstellung zu Figur 14a jedoch in einem Zustand, bei welchem der Filmrand nur durch die Klemmeinrichtung der Führungskluppen gehalten wird und die Klemmeinrichtung der Steuerkluppen geöffnet ist, so dass der Filmrand im Bereich der Steuerkluppen freigegeben ist und dadurch der Einsprung größer wird;
- Figur 15:: eine ausschnittsweise räumliche Darstellung eines Öffnerrades;
- Figur 16:: eine Draufsicht auf das in Figur 15 gezeigte Öffnerrad zur Verdeutlichung der selektiven Öffnung der Klemmeinrichtung nur an den Steuerkluppen;
- Figur 17:: eine schematische Draufsicht auf eine Querreckanlage oder -stufe, an der beispielhaft eingezeichnet ist, an welchen Stellen das in den Figuren 15 und 16 gezeigte Öffnerrad angeordnet sein kann;
- Figur 18:: eine schematische Querschnittsdarstellung auf einen rampenförmigen Übergang von einer Führungsschiene 15 zu einer Steuerschiene 115;
- Figur 19a:: eine schematische Querschnittsdarstellung senkrecht durch eine Führungs- und eine Steuerschiene zur Verdeutlichung, wie die Steuerschiene fest vor der Führungsschiene montiert sein kann;
- Figur 19b:: eine zu Figur 19a vergleichbare Querschnittsdarstellung mit einer zur Führungsschiene verstellbaren Steuerschiene;
- Figur 20a:: eine schematische Querschnittsdarstellung durch eine über ein Gewindeglied lageveränderliche Steuerschiene, wobei die Steuerschiene an die Führungsschiene heran verstellt ist;
- Figur 20b:: eine entsprechende Querschnittsdarstellung zu Figur 20a, bei der jedoch mittels des Gewindegliedes die Steuerschiene gegenüber der Führungsschiene unter Ausbildung eines Abstandes verstellt ist;
- Figur 21a bis 21d:: jeweils eine räumliche Querschnittsdarstellung durch einen Verstellmechanismus mit Halteeinrichtung und Führungs- und Steuerschiene, zur Verdeutlichung, wie eine Steuerschiene durch den Verstellmechanismus in unterschiedlicher Lage zur Führungsschiene positionierbar ist.

### Grundsätzlicher Aufbau einer Querreckanlage:

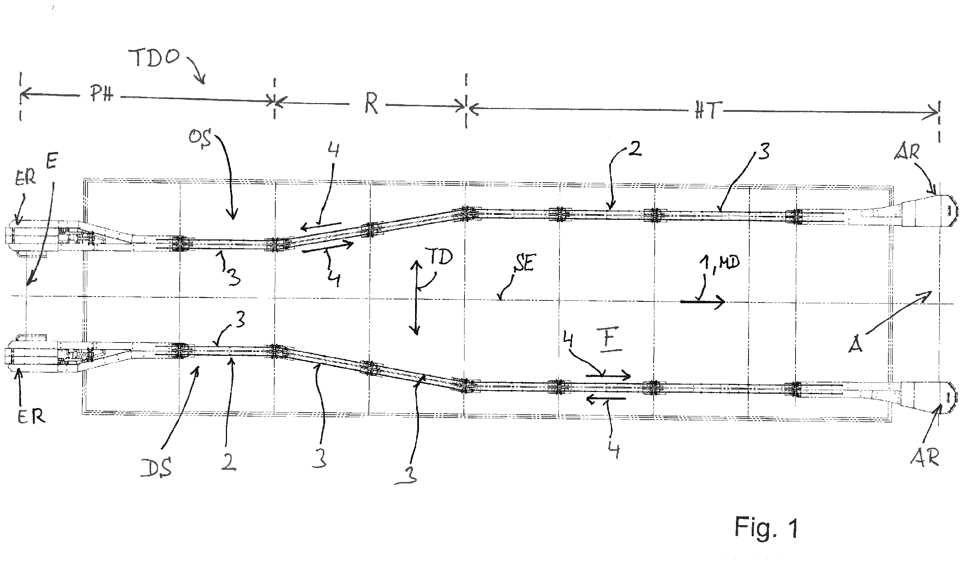

Die nachfolgend beschriebene Folien-Breit- oder QuerReckanlage, die nachfolgend auch kurz als TDO-Reckanlage (TDO = Transverse Direction Oven) bezeichnet wird, weist bekanntermaßen zwei in der Regel symmetrisch ausgebildete Antriebssysteme auf. In Figur 1 sind die beiden vertikal zur Zeichen-Ebene verlaufenden und symmetrisch zur Symmetrie-Ebene SE angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffilms F längs der Abzugsrichtung 1 in Maschinenrichtung MD (MD = Machine Direction) hindurch bewegt wird. Die erläuterte TDO-Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein).

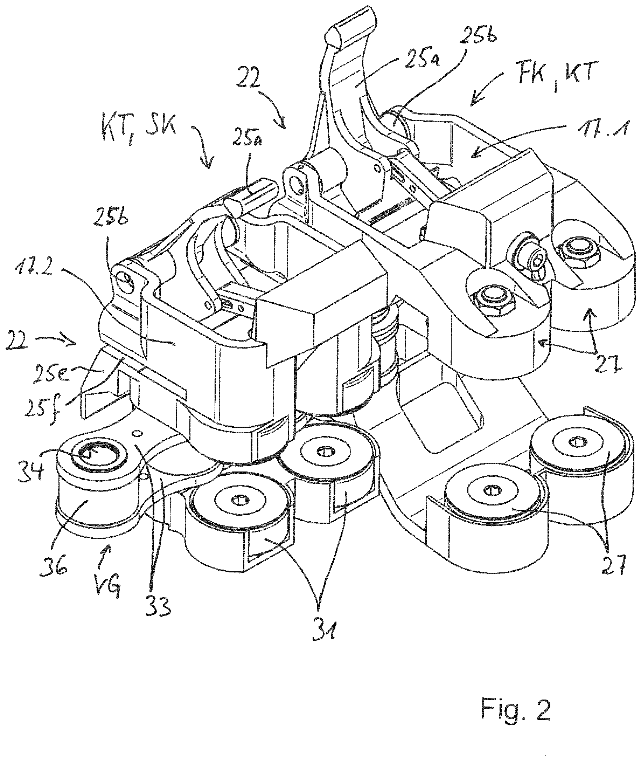

Ein monoaxialer oder uniaxialer Film F (wenn also eine Längsreckanlage der gezeigten Querreckanlage vorgelagert ist) oder ein unverstreckter Film F (wobei im Folgenden von einem Film oder einer Folie gesprochen wird, obgleich mit einer derartigen Reckanlage allgemein eine Behandlungsbahn F entsprechend behandelt und quergereckt werden kann, so dass die Erfindung insoweit nicht auf eine Kunststofffolienbahn beschränkt ist) läuft im Einlaufbereich E in die Reckanlage ein und wird dort von nachfolgend noch erörterten Kluppen, wie sie beispielsweise anhand von Figur 2 gezeigt sind, an beiden seitlichen Rändern ergriffen und eingeklemmt, und zwar auf der so genannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier in Querrichtung TD verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Querreckmaschine, also die Querreckanlage.

Auf den beiden umlaufenden Bahnen 2 wird also jeweils ein Transportsystem 3 in Umlaufrichtung 4 angetrieben, wozu die beiden Transportsysteme eine Vielzahl von Kluppen-Transporteinheiten KT umfassen.

In Figur 1 ist ferner im Auslaufbereich A ein Auslaufrad AR für jede geschlossene umlaufende Führungsbahn 2 und im Eingangsbereich E ein Eingangsrad ER für jede Führungsbahn dargestellt. Das umlaufende Transportsystem 3 wird über das angetriebene Auslaufrad AR angetrieben, wobei das Eingangsrad ER eventuell zusätzlich mit Teillast angetrieben werden kann.

Im Rahmen der Erfindung umfassen dabei die KluppenTransporteinheiten KT Führungskluppen FK sowie Steuerkluppen SK, auf deren Bedeutung nachfolgend noch weiter eingegangen wird.

In Figur 2 ist auszugsweise in perspektivischer Darstellung vorne links eine Steuerkluppe SK und davon rechts daneben eine Führungskluppe FK schematisch dargestellt. Dabei wird an dieser Stelle bereits angemerkt, dass der Begriff "Kluppe" auch Synonym für "Kluppenglieder", "Kluppenwagen" und dergleichen verwendet wird bzw. diesen Bedeutungsinhalt hat. Dies gilt dann gleichermaßen für die Begriffe "Führungskluppe" sowie die "Steuerkluppe".

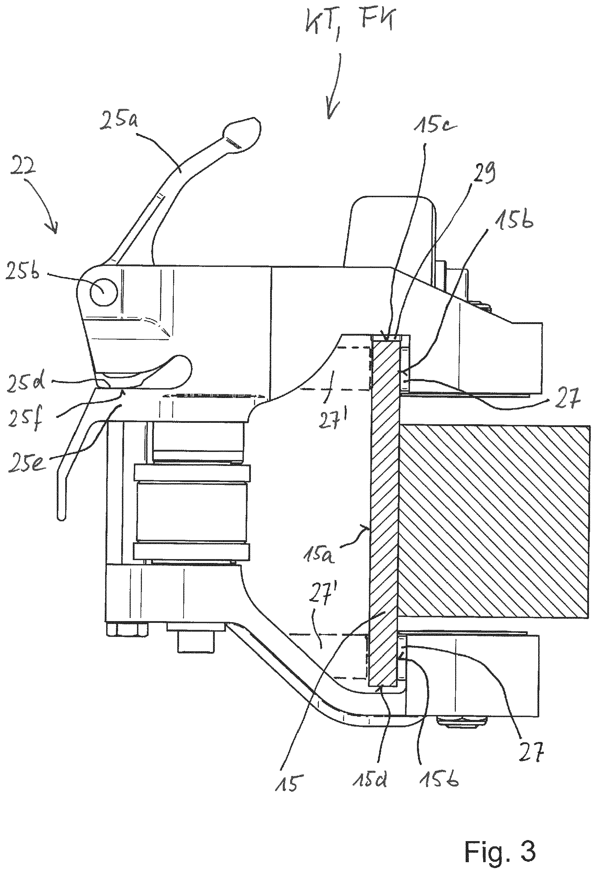

Aus der Darstellung gemäß Figur 2 sowie aus einer schematischen Querschnittsdarstellung gemäß Figur 3 ist zu ersehen, dass die Führungskluppe FK einen Kluppenkörper 17.1 umfasst, und zwar mit einer Klemmeinrichtung 22 in Form eines Kluppenhebels 25a, der über eine Kluppenachse 25b zwischen einer Freigabe- oder Öffnungs- und einer Schließstellung verschwenkbar ist. Der Kluppenhebel 25a wird dabei häufig auch als Messerklappe 25a bezeichnet. In einer Folienreckanlage kann mittels einer derartigen Anordnung ein Film F zwischen einer Greiffläche 25d am unteren Ende des Kluppenhebels 25a und einer Klemmfläche 25f an einem Kluppentisch 25e fixiert, d.h. eingeklemmt und festgehalten werden.

Es wird bereits an dieser Stelle angemerkt, dass jede Kluppentransporteinheit KT nicht zwingend nur einen Kluppenhebel mit entsprechendem Kluppentisch etc., sondern auch mehrere Kluppenhebel, beispielsweise zwei Kluppenhebel umfassen kann, die üblicherweise über eine axial zueinander fluchtende Kluppenachse verschwenkbar sind.

Eine derartige als Führungskluppe FK bezeichnete Kluppentransporteinheit KT kann auf einer Führungsschiene 15 längs verfahren werden. Die Führungsschiene 15 ist in der Regel im Querschnitt senkrecht zu ihrer Längserstreckung rechteckförmig gestaltet, wobei ihre größte Querschnittserstreckung in der Regel in Vertikalrichtung verläuft. Eine derartige Führungsschiene weist dann zwei vertikal verlaufende Laufflächen 15a und 15b auf, wobei die eine Lauffläche 15a in Richtung Film oder Einklemmseite eines Films und die dazu parallele Lauffläche 15b in entgegengesetzter Richtung, also zur Rückseite weist. Diese von der Einspann- oder Filmseite wegweisende Lauffläche 15b wird nachfolgend auch als rückseitige Lauffläche 15b bezeichnet.

So verfügt eine derartige Führungsschiene 15 in der Regel auch über eine oben liegende Traglauffläche 15c, sofern nicht noch eine separate Tragschiene vorgesehen ist. In Einzelfällen wird auch die nach unten weisende und zur Traglauffläche 15c unten liegende Lauffläche 15d als Gegenlauffläche verwendet.

Im gezeigten Ausführungsbeispiel umfasst die Führungskluppe mehrere Laufräder 27, die auch als Führungsrollen 27 bezeichnet werden. Aus Figur 2 ist dabei zu ersehen, dass ein Paar der vier Führungsrollen 27 eher obenliegend und ein weiteres Paar von Führungsrollen 27 eher untenliegend angeordnet sind, so dass die jeweils in Umlaufrichtung 4 (s. Figur 1) versetzt zueinander liegenden Führungsrollen 27 eines jeden Führungsrollenpaares auf der rückseitigen Lauffläche 15b der Führungsschiene 15 abrollen können.

Aus der Querschnittsdarstellung gemäß Figur 3 ist auch zu ersehen, dass bei der Führungskluppe FK keine weiteren Laufrollen/Führungsrollen vorgesehen sind, die beispielsweise an der innen- oder einspannseitigen Lauffläche 15a abrollen. Derartige film- oder einspannseitige Laufrollen 27' können aber vorgesehen sein und sind in Figur 3 strichliert eingezeichnet. In diesem Falle würde üblicherweise ebenfalls zumindest eine oder mehrere Laufrollen 27' eingesetzt sein, beispielsweise ebenfalls wieder ein oben- und ein untenliegendes Führungsrollenpaar, so dass die entsprechende Führungskluppe FK über diese Laufrollen 27' zusätzlich an der Führungsschiene 15 geführt ist, ohne in Querrichtung zu den Laufflächen 15a, 15b verstellbar zu sein. Das entsprechende Gewicht der Führungskluppe wird durch die eine oder mehreren obenliegenden und um eine Horizontalachse drehenden Gewichtslaufrolle 29 aufgenommen, die auf der nach oben weisenden Traglauffläche 15c abrollt (wobei die Gewichtslaufrolle 29 in Figuren 2 und 3 innerhalb eines Laufrollengehäuses, welches nach unten hin zur nach oben weisenden Lauffläche 15c offen ist, angeordnet ist und von daher in Figur 2 nicht und in Figur 3 kaum sichtbar ist) .

Falls es notwendig sein sollte, könnte auch eine Gegenrolle vorgesehen sein, die bevorzugt unter Vorspannung auf der nach unten weisenden Gegenlauffläche 15d abrollt. Grundsätzlich notwendig ist dies jedoch nicht.

Die in Figur 2 gezeigte Steuerkluppe SK weist ebenfalls einen Kluppenkörper 17.2 mit einer Klemmeinrichtung 22 auf. Ansonsten ist die Steuerkluppe SK ebenfalls mit einem um eine Kluppenachse 25b verschwenkbaren Kluppenhebel 25a, einer Greiffläche 25d und einem Kluppentisch 25e mit einer nach oben weisenden Klemmfläche 25f ausgestattet, vergleichbar oder identisch zu den entsprechenden Ausgestaltungen bei der Führungskluppe FK.

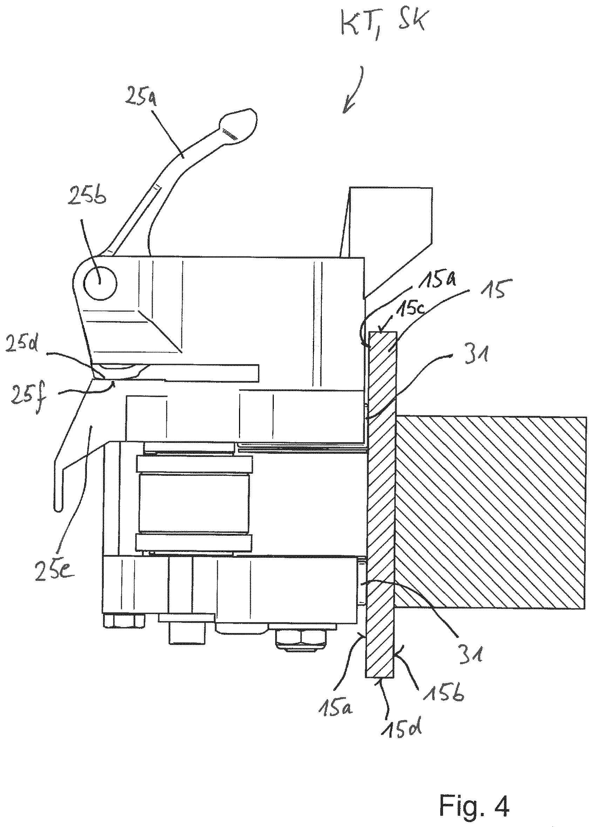

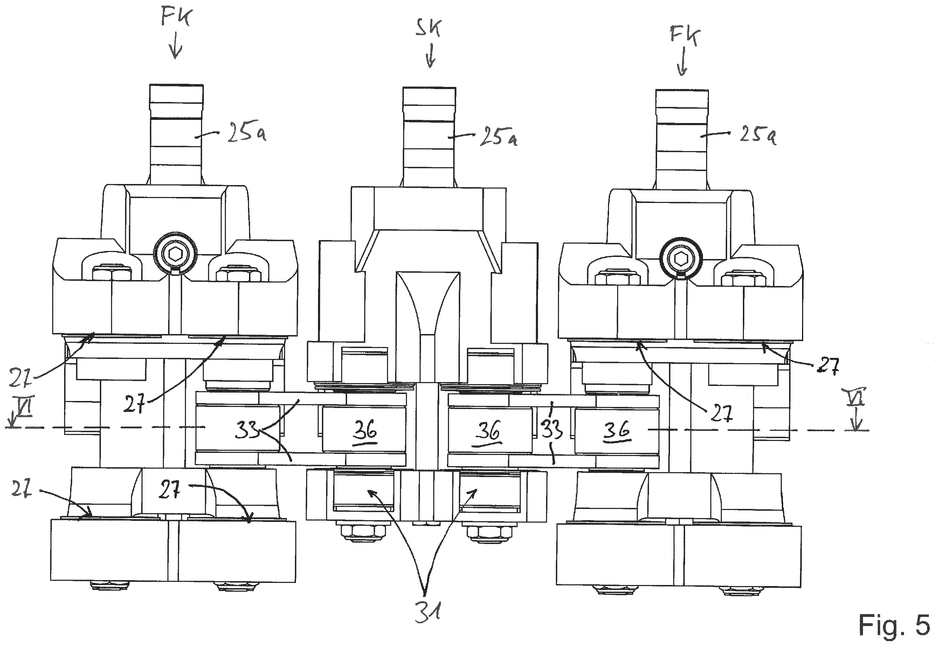

Aus der Querschnittsdarstellung gemäß Figur 4 ist allerdings ersichtlich, dass im gezeigten Ausführungsbeispiel die Steuerkluppe SK nur Laufrollen 31 aufweist, die auch als Steuerrollen 31 bezeichnet werden, die ausschließlich auf der film- oder einspannseitigen Lauffläche 15a abrollen. Dabei weist jede Steuerkluppe SK bevorzugt zwei oben liegende Steuerrollen 31 und zwei demgegenüber tieferliegende Steuerrollen 31 auf, also ebenfalls zumindest zwei Paare von Steuerrollen, die jeweils in Umlaufrichtung 4 versetzt zueinander liegend angeordnet sind. Der Aufbau ist insoweit zumindest vergleichbar mit dem Aufbau der Führungskluppe FK, lediglich mit dem Unterschied, dass - wie im Ausführungsbeispiel gezeigt - die Führungskluppen FK bevorzugt nur Führungsrollen 27 aufweisen, die auf der rückseitigen Lauffläche 15b abrollen, wohingegen die Steuerkluppen SK nur Steuerrollen 31 umfassen , die nur auf der dazu gegenüberliegenden film- oder einspannseitigen Lauffläche 15a abrollen. Bevorzugt ist der Gesamtaufbau derart, dass in Umlaufrichtung 4 jeweils abwechselnd eine Führungskluppe FK und darauf folgende eine Steuerkluppe SK angeordnet ist, auf die dann wieder eine Führungskluppe usw. folgt, wie dies beispielsweise aus der rückseitigen Darstellung gemäß Figur 5 zu ersehen ist.

Allerdings wird bereits an dieser Stelle angemerkt, dass auch in weiten Grenzen beliebige andere Abfolgen möglich sind. So muss beispielsweise nicht immer nur auf eine Führungskluppe eine Steuerkluppe folgen, sondern es können auch zwei oder mehrere Führungskluppen aufeinander folgen und erst dann zumindest eine oder beispielsweise zwei Steuerkluppen vorgesehen sind, bevor wiederrum eine oder mehrere Führungskluppen folgen. Dadurch lassen sich quasi beliebige Aneinanderreihungen realisieren, worüber eine an die Gegebenheiten optimale Anpassung möglich wird.

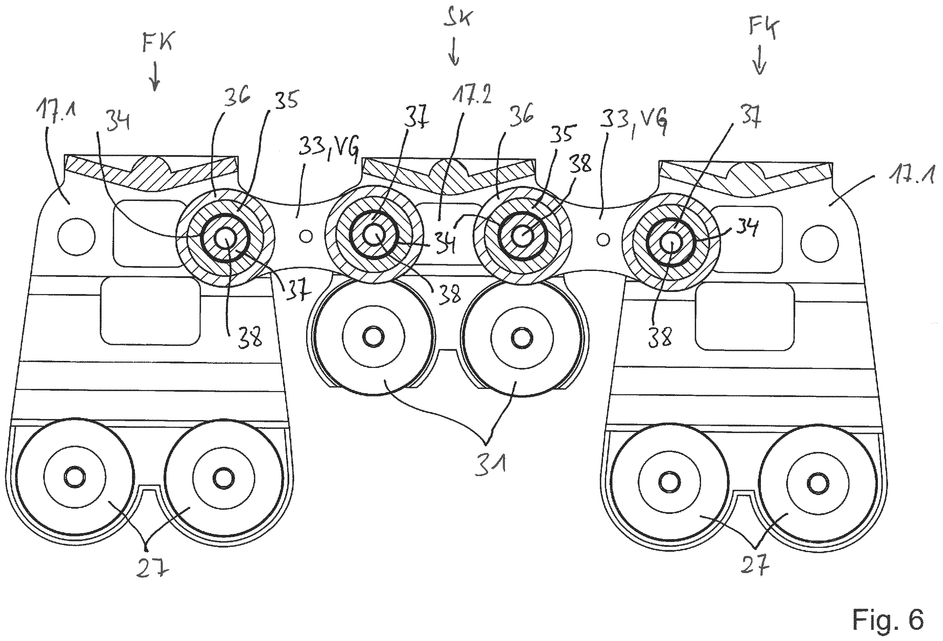

So gebildete und angeordnete Kluppenstransporteinheiten KT können, wie sich aus der rückseitigen Darstellung unter Weglassung der Führungsschiene 15 gemäß Figur 5 ergibt, über Verbindungsglieder VG miteinander gelenkig verbunden sein, wobei dieses Verbindungsglied VG als ein einzelnes Kettenglied ausgebildet sein kann. Dazu umfasst das Verbindungsglied V6 im gezeigten Ausführungsbeispiel ein Paar von im Axialabstand parallel zueinander angeordneten Verbindungslaschen 33, die jeweils zwei Bohrungen 34 (Figur 6) aufweisen, in deren Axialverlängerung zwischen den beiden Laschen eine Hülse 35 angeordnet ist, worüber die beiden Verbindungslaschen 33 gegebenenfalls fest miteinander verbunden sind, aber nicht verbunden sein müssen. Auf dieser Hülse 35 kann bei Bedarf auch noch eine Schonrolle 36 in Form einer Außenhülse aufgesteckt sein, die auf der darunter befindlichen Hülse 35 drehen kann. In der Darstellung gemäß Figur 5 ist bezüglich den als Kettenglieder gestalteten Verbindungsgliedern VG zwischen den beiden in Axialrichtung versetzt liegenden Laschen 33 nur die jeweils dazwischen befindliche Schonrolle 36 voll sichtbar, wobei darunter die erwähnte Hülse 35 angeordnet ist.

Aus der Darstellung gemäß Figur 5 ist auch ersichtlich, dass jedes kettenähnliche Verbindungsglied VG als einzelnes Kettenglied vorgesehen ist, welches mit einem nächsten kettenähnlichen Verbindungsglied VG keine Verbindung aufweist.

Figur 6 zeigt einen Horizontalschnitt längs der Linie VI-VI in Figur 5. Daraus ist zu ersehen, dass die erwähnten, durch die innere Hülse 35 hindurch und die Laschenenden der Verbindungslaschen 33 hindurchgehenden Bohrungen 34 von jeweils einem Bolzen 37 durchragt werden, der an seinen beiden gegenüberliegenden Enden am jeweiligen Kluppenkörper 17.1 fest gehalten und verankert ist, also einmal am Kluppenkörper 17.1 der Führungskluppe FK bzw. dem Kluppenkörper 17.2 der Steuerkluppe SK. Entsprechende Bohrungen sind an den jeweiligen Kluppenkörper 17.1 bzw. 17.2 vorgesehen, in welche dann die betreffenden Bolzen 37 eingreifen und darüber an dem jeweiligen Kluppenkörper fest verankert sind. Somit ist jedes als Verbindungsglied VG wirkendes Kettenglied um die einen jeweiligen Bolzen 37 (der nachfolgend teilweise auch als Verankerungsbolzen 37 bezeichnet wird) zentral durchsetzende Verschwenkachse 38 gegenüber einer Führungskluppe FK an dem einen Ende wie gegenüber einer am anderen Ende des Verbindungsgliedes VG vorgesehenen Steuerkluppe SK relativ verschwenkbar. Die Bolzen 37 und damit die Verschwenkachsen 38 verlaufen senkrecht zur Umlaufrichtung 4 der Führungs- und der Steuerkluppen FK bzw. SK und damit parallel zu den Führungsflächen 15a, 15b der Führungsschiene wie aber auch zu nachfolgend noch erörterten Führungsflächen 115a bzw. 115b einer Steuerschiene 115.

Dadurch erhält man eine auf den beiden Führungsbahnen 2 jeweils umlaufende Transporteinrichtungen oder ein umlaufendes Transportsystem, wobei jeweils die Führungskluppen FK und die Steuerkluppen SK abwechselnd unter Zwischenschaltung eines Verbindungsgliedes VG miteinander verbunden sind und so längs der Führungsschiene 15 fortbewegt werden. Somit ergibt sich in dem Transportsystem eine Abfolge
FK - VG - SK - VG - FK - VG - ...

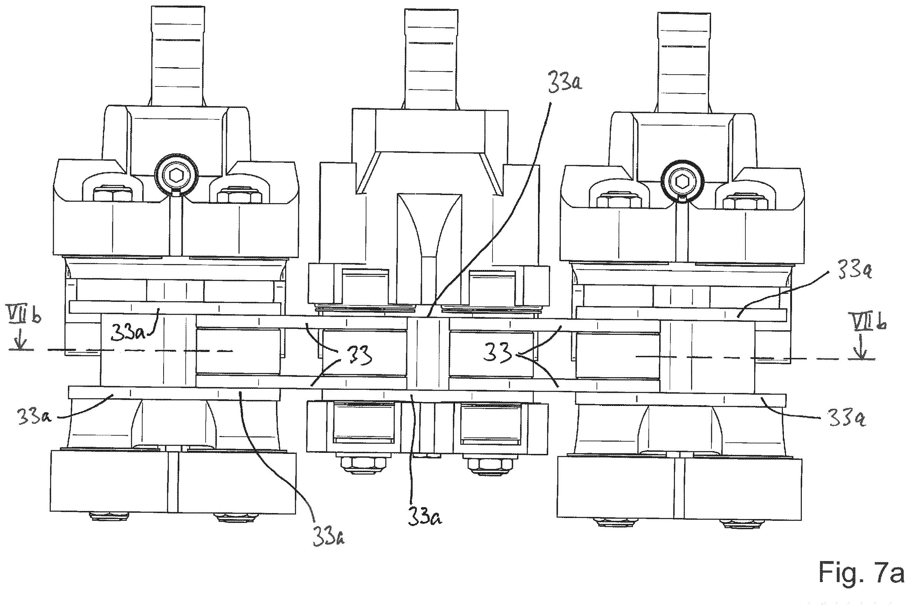

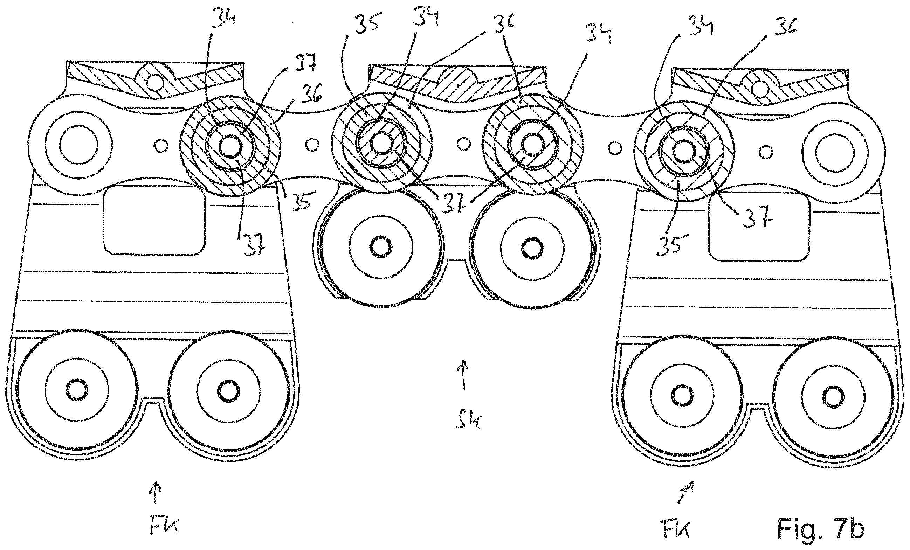

Abweichend zu der Verbindung zweier aufeinander folgender Kluppentransporteinheiten KT unter Zwischenschaltung lediglich eines Verbindungsgliedes VG kann als Transportsystem 3 auch eine durchgängige Transportkette (Endloskette) eingesetzt werden, wie dies in der rückseitigen Darstellung gemäß Figur 7a und der Querschnittsdarstellung längs der Linie VIIa VIIa in der Querschnittsdarstellung gemäß Figur 7b zu ersehen ist.

Dort sind zu den erwähnten Verbindungsgliedern VG, wie anhand von Figuren 5 und 6 beschrieben, noch zusätzliche äußere Verbindungslaschen 33a vorgesehen, so dass jeweils die einzelnen anhand von Figuren 5 und 6 erläuterten Verbindungsglieder VG nunmehr durch die jeweils zusätzlichen Paare von äußeren Verbindungsgliedern 33a zu einer durchlaufenden Transportkette 3a verbunden sind. Die erwähnten Bolzen 37 durchsetzen dann noch entsprechende Bohrungen 34a in den äußeren Verbindungslaschen 33a.

An dem Gesamtaufbau und der Gesamtfolge ändert sich dadurch nichts.

Im zuletzt genannten Fall gemäß Figur 7a und 7b kann davon gesprochen werden, dass das Transportsystem 3 in Form einer Transportkette 3a gebildet ist, wobei die Transportkette 3a aufeinanderfolgend jeweils ein Führungsglied FG, ein Verbindungsglied VG, ein Steuerglied SG, ein Verbindungsglied VG und ein weiteres Führungsglied FG usw. umfasst, wobei an den jeweiligen Führungsgliedern FG eine Führungskluppe FK und an den jeweiligen Steuergliedern SG eine Steuerkluppe SK befestigt ist und mitbewegt wird.

Demgegenüber kann im Falle des Ausführungsbeispiels nach Figuren 5 und 6 davon gesprochen werden, dass das umlaufende und angetriebene Transportsystem 3 Führungsglieder in Form von Führungskluppen FK aufweist, ebenso wie die Steuerglieder SG in Form von Steuerklappen SK.

Mit dem so gebildeten Transportsystem 3 werden also die einzelnen Glieder FG, VG und SG unter Erzeugung von Zugkräften fortbewegt, wobei jedes Glied ein nachfolgendes Glied unter Einwirkung von Zugkräften längs der Führungsbahn 2 mitbewegt.

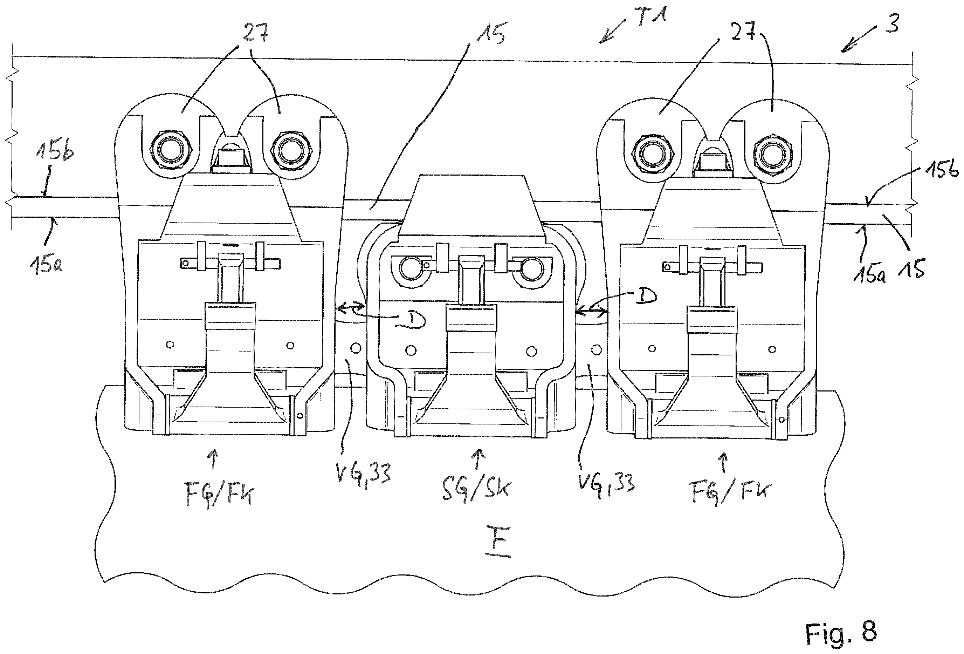

In Figur 8 ist in schematischer Draufsicht gezeigt, wie ein so gebildetes Transportsystem 3 mit den Führungsgliedern FG mit den Führungskluppen FK und den Steuergliedern SG/Steuerkluppen SK, die abwechselnd aufeinanderfolgend unter Zwischenschaltung jeweils eines ein Führungsglied FG und ein Steuerglied SG verbindendes Verbindungsgliedes VG gelenkig miteinander verbunden sind, längs der Führungsschiene 15 im unrelaxierten Zustand verfahren wird. Dabei laufen die rückseitigen Führungsrollen 27 der Führungskluppen FK auf der rückseitigen Lauffläche 15b der Laufschiene und die film- oder einspannseitigen Steuerrollen 31 der Steuerkluppen SK auf der film- oder einspannseitigen vorderen Lauffläche 15a ab.

Da die Steuerglieder SG oder Steuerkluppen SK selbst bevorzugt nicht mit einer eigenen Gewichtsrolle oder mehreren Gewichtsrollen ausgestattet sind, werden die Steuerglieder oder Steuerkluppen über das jeweils vor- und nachlaufende Verbindungsglied VG letztlich durch die benachbarten Führungsglieder oder Führungskluppen getragen.

Um an einer gewünschten Stelle der Reckanlage eine Relaxierung in Abzugsrichtung 1, also in Maschinenrichtung (MD-Richtung) durchführen zu können, wird nunmehr der Abstand von aufeinander folgenden Führungsgliedern FG/Führungskluppen FK verringert.

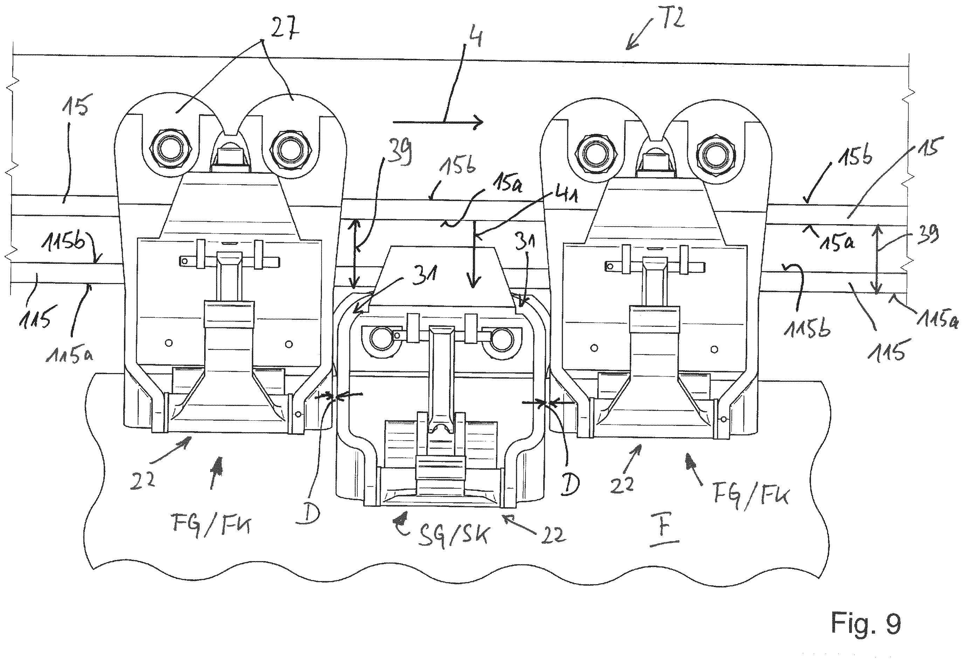

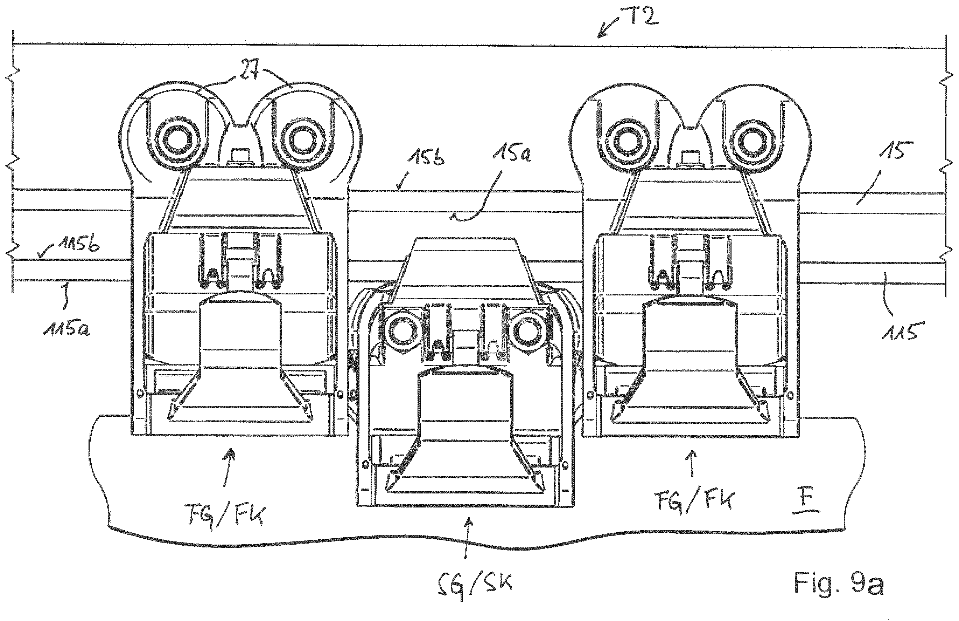

Wie nachfolgend anhand von Figur 9 dargestellt ist, erfolgt dies mittels einer zusätzlich vorgesehenen Steuerschiene 115, die sich an der gewünschten Umlaufstelle der Reckanlage bevorzugt aus der Ebene der film- oder einspannseitigen Lauffläche 15a rampenförmig heraus in Richtung Film F erhebt und eine in der Regel, abgesehen von der einlaufseitigen und der auslaufseitigen Rampe, zumindest näherungsweise parallel zu der Führungsschiene verlaufende Steuerschienenfläche 115a bildet, die bevorzugt in einem Abstandsmaß 39 vor der filmseitigen Lauffläche 15a verläuft, bis sie an einer anderen gewünschten Stelle wieder in die Ebene der Lauffläche 15a zurückgeführt ist. Es wird also hier bevorzugt ein keilflächenähnlicher sanfter Übergang von der Lauffläche 15a zur Steuerschienenfläche 115a vorgesehen.

Wie anhand von Figur 9 gezeigt ist, ist die Anordnung derart, dass die Steuerrollen 31 des Steuergliedes SG/der Steuerkluppe SK auf der Steuerschienenfläche 115a abrollen, wodurch das Steuerglied SG in Querrichtung 41, in der Regel senkrecht zur Umlauf- oder Vorschubrichtung 4, relativ zu den Führungsgliedern FG/ Führungskluppen FK verfahren wird, die in ihrer in Querrichtung konstanten Position längs der Führungsschiene 15 weiter bewegt werden. Bei dem gezeigten Ausführungsbeispiel wird dabei die Steuerkluppe SK in Richtung auf den Film zu lageverändert.

Da jeweils ein Steuerglied SG hier in Form einer Steuerkluppe SK jeweils vor- und nachlaufend über ein gelenkiges Verbindungsglied VG mit dem vor- und dem nachlaufenden Führungsglied FG hier in Form einer Führungskluppe FK verbunden ist, diese Verbindungsglieder VG also aus ihrer ansonsten über ihre in Längsrichtung oder zumindest näherungsweise in Längsrichtung verlaufende Ausrichtlage verschwenkt werden, verkürzt sich somit der Seitenabstand zwischen einem Führungsglied FG und dem darauffolgenden Steuerglied ebenso wie zwischen dem Steuerglied und einem nächstfolgenden benachbarten Führungsglied, wie aus Figur 9 im Vergleich zu Figur 8 zu ersehen ist.

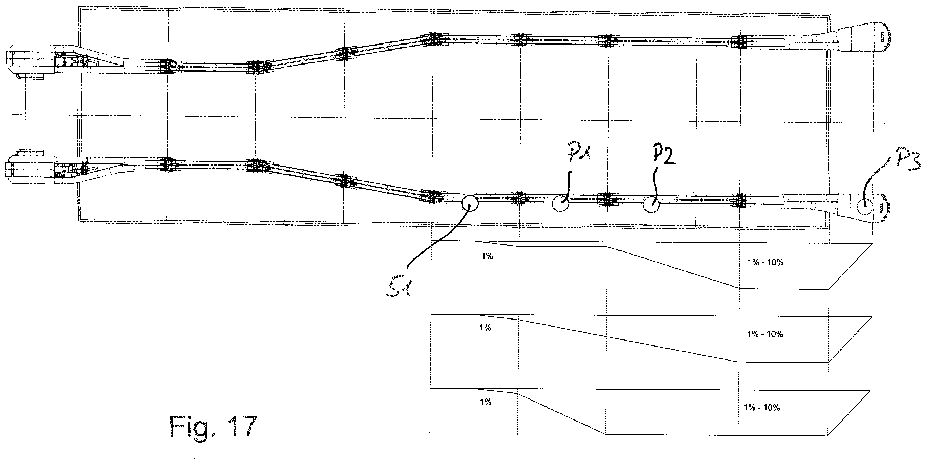

In Figur 9 ist die Steuerschiene 115 gezeigt, die mit ihren zugehörigen Laufflächen versetzt zur Führungsschiene 15 und deren Laufflächen angeordnet ist, worüber die Positionsverlagerung der Steuerkluppen SK in Relation zu den Führungskluppen FK bewirkt wird, also quer und insbesondere senkrecht zur Führungs- bzw. Steuerschiene 15, 115. Wie erwähnt, ist die Steuerschiene und deren Lauffläche 115a, wie dies aus dem Stand der Technik bekannt ist, über eine auflaufende und eine in Umlaufrichtung ablaufende Rampe mit der Führungsschiene bzw. der Führungsschienenfläche verbunden, so dass die Steuerrollen 31 der Steuerkluppen SK möglichst stoßfrei von der Führungsschienenfläche 15a über eine auflaufende Rampe in die Steuerschienenfläche 115a überführt und am Ende dieser Steuerschienenfläche 115a wieder über eine abfallende Rampe in die Ebene oder das Niveau der Führungsschienenfläche 15a rückgeführt ist. Während einer ersten Teilstrecke T1 (z.B. in Figur 8 oder Figur 17) auf der umlaufenden Führungsbahn 2 ist also nur eine Führungsschiene 15 vorgesehen (die beispielsweise ausschittsweise in Figur 8 zu ersehen ist), wohingegen auf zumindest einer zweiten Teilstrecke T2 (z.B. in Figur 9 oder Figur 17) der umlaufenden Führungsbahn 2 (in Figur 9 nur ausschnittsweise zu ersehen) neben der Führungsschiene 15 noch eine Steuerschiene 115 wirksam ist, zumindest also neben der Führungsschienenfläche 15a noch eine Steuerschienenfläche 115a wirksam ist, auf die die Steuerrollen 31 auflaufen.

Wie durch den Vergleich von Figur 8 zu Figur 9 zu ersehen ist, nimmt durch das Auflaufen der Steuerkluppe SK auf die Steuerschiene 115 der Abstand in Umlaufrichtung 4 zwischen einer Führungskluppe FK und einer benachbarten Steuerkluppe SK und damit zwischen zwei aufeinanderfolgenden Führungskluppen deutlich ab, verglichen mit dem Zustand, wenn sowohl die Führungskluppen FK als auch die Steuerkluppen SK nur auf der gemeinsamen Führungsschiene 15 längs bewegt werden.

Bevorzugt ist dabei vorgesehen, dass die Klemmeinrichtungen 22 auf den Steuerkluppen SK von ihrer Schließ- oder Klemmstellung in Öffnungs- oder Freigabestellung überführt werden, wenn die Steuerkluppen SK sich im Bereich ihrer zumindest einen zweiten Teilstrecke T2 befinden, in der sie auf die Steuerschiene 115 auflaufen und in Querrichtung quer zu den Führungskluppen FK verstellt werden. Dabei kann die Öffnungsbewegung der Klemmeinrichtung schon vor Auflaufen auf eine die Steuerkluppen SK auf die Steuerschiene überführende Rampe (bei unmittelbarem Beginnen des Auflaufens auf eine rampenförmige Erhebung der Steuerschiene) oder aber erst beim vollständigen Erreichen des Höhenniveaus der Steuerschiene (in der sie mehr oder weniger parallel zur Führungsschiene verläuft) oder zu einem sonstigen späteren Zeitpunkt durchgeführt werden.

Abweichend von dem vorausgenannten Ausführungsbeispiel gemäß Figur 9 ist es nicht zwingend notwendig, dass die Steuerkluppen SK - wenn sie längs der Steuerschiene 115 bewegt werden - von ihrer Schließ- oder Klemmstellung zwingend in ihre Öffnungs- oder Freigabestellung überführt werden. Auch im Bereich der zweiten Teilstrecke T2 können die Steuerkluppen SK in ihrer geschlossenen Position verbleiben. Ein geschlossen Halten der Steuerkluppen auch auf der zweiten Teilstrecke T2 kann Vorteile dann beispielsweise aufweisen, wenn dickere Filme hergestellt und/oder gereckt werden sollen, d.h. insbesondere einer Relaxierung unterzogen werden sollen. Dies gilt insbesondere für PET-Dickfilme, bei denen es sich als besonders günstig erwiesen hat, wenn die Steuerkluppen ebenso wie die Führungskluppen in ihrer Schließ- oder Klemmstellung verbleiben. Dies in einer zu Figur 9 ähnlichen Darstellung gemäß Figur 9a gezeigt, bei der die erwähnten Steuerkluppen SK auf der zu der Führungsschiene 15 beabstandet angeordneten Steuerschiene 115 verfahren werden, allerdings im Gegensatz zu dem Ausführungsbeispiel nach Figur 9 nicht geöffnet sind. D.h., dass der Film weiterhin von allen Kluppen auch in diesem Bereich der zweiten Teilstrecke T2 gehalten wird, also sowohl von den Führungs- wie den Steuerkluppen FK, SK. Gleichwohl wird aber der Abstand zwischen zwei aufeinanderfolgenden Führungskluppen FK verringert, ebenso wie der Abstand zwischen einer Führungskluppe und einer Steuerkluppe bzw. einer Steuerkluppe und einer nachfolgenden Führungskluppe verringert ist. Ferner ist es bei einer derartigen Variante ebenso möglich, dass die Messerklappen und der Folienhaltebereich bei den Steuer- und den Führungskluppen gleich ausgebildet sind. Dabei wird angemerkt, dass es sich hierbei nur um eine mögliche Variante handelt, die nicht zwingend erforderlich ist.

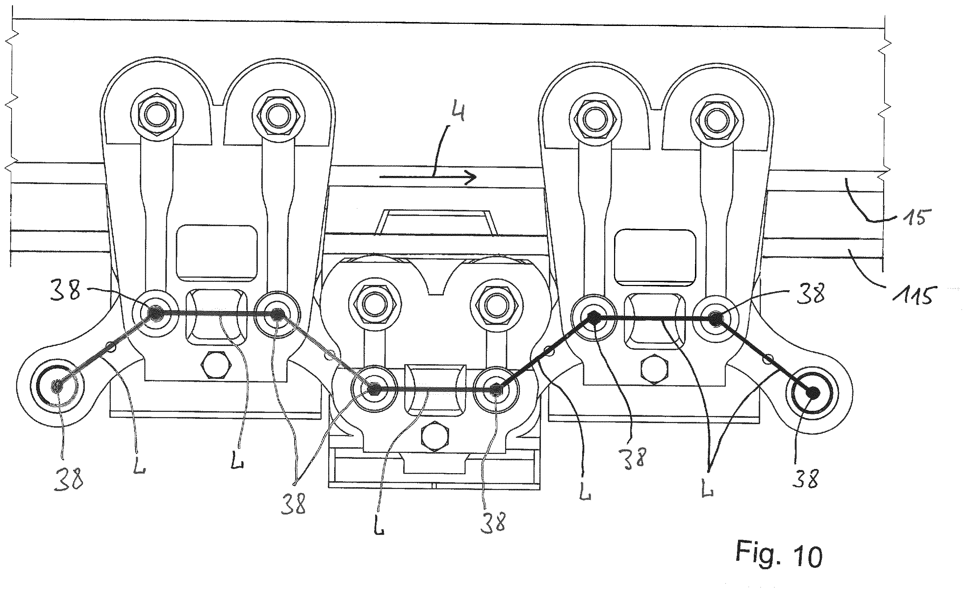

Anhand von Figur 10 ist in schematischer Draufsicht unter weiterer Weglassung einzelner Teile eine Darstellung wiedergegeben, aus der sich die Kinematik aus der Abfolge eines jeweiligen Verbindungsglieds VG, eines nachfolgenden Steuerglieds SG, eines darauf wiederum nachfolgenden Verbindungsglieds VG, eines daraufhin folgenden Führungsglieds FG, eines nachfolgenden Verbindungsglieds VG usw. ergibt.

Daraus ist zu ersehen, dass jeweils ein Kettenglied, beispielsweise in Form des Führungsglieds FG, in seiner Ausgangslage verbleibt, wohingegen ein übernächstes Kettenglied in Form eines Steuergliedes SG weiterhin in Parallellage zur Führungsschiene 15 positioniert ist, aber in größerem Seitenabstand zur Führungsschiene 15, wobei ein derartiges Führungsglied FG und ein derartiges Steuerglied SG jeweils über ein schräg ausgelenktes Verbindungsglied VG verbunden sind. Dadurch ergibt sich die sogenannte Trapez-Anordnung. In Figur 10 sind dabei die Verbindungslinien L für die einzelnen Führungs-, Steuer- und Verbindungsglieder eingezeichnet sowie die Verstellachsen 38 zeichnerisch hervorgehoben, um die herum die Verschwenkbewegungen der Verbindungsglieder VG relativ zu den Führungsgliedern FG bzw. zu den Steuergliedern SG durchgeführt wird.

Diese Verbindungs- oder Wirklinien F verlaufen also jeweils von einer Zentralachse 38 zur nächsten Zentralachse 38, die jeweils die Verankerungsbolzen 37 zentral durchsetzen, worüber die einzelnen Kluppen mit den Verbindungsgliedern VG gelenkig oder verschwenkbar verbunden sind.

Da, wie ausgeführt, auch die Steuerkluppen SK jeweils zwei in Umlaufrichtung 4 versetzt zueinander liegende Rollen (oder weitere auch noch in Vertikalrichtung versetzt zueinander liegende Rollenpaare) aufweisen, sind die Steuerkluppen SK während der zumindest einen zweiten Teilstrecke T2 stets parallel zu den Führungskluppen FK ausgerichtet, da ja auch die Führungskluppen FK über versetzt liegende Rollen an den Führungsschienenflächen abrollen und die Führungsschiene 15 und die Steuerschiene 115 sowie die zugehörigen Führungsschienenflächen und die Steuerschienenflächen, mit Ausnahme von der auflaufseitigen oder ablaufseitigen Rampe, parallel zueinander verlaufen oder zumindest näherungsweise parallel zueinander verlaufen.

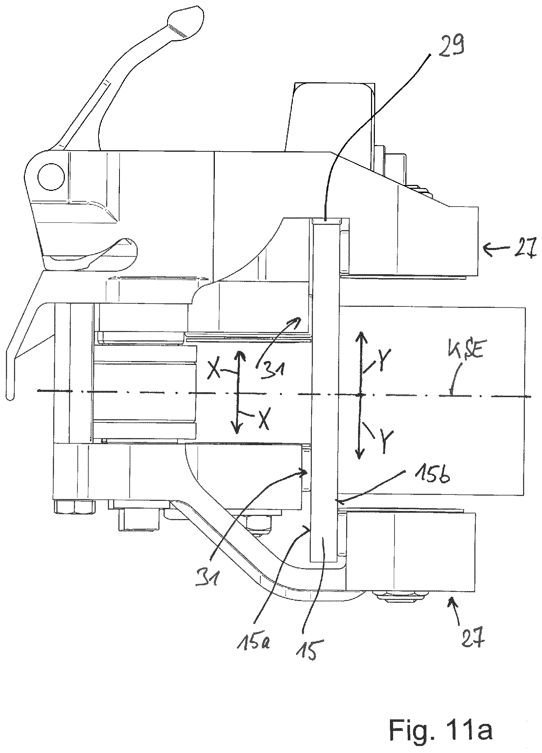

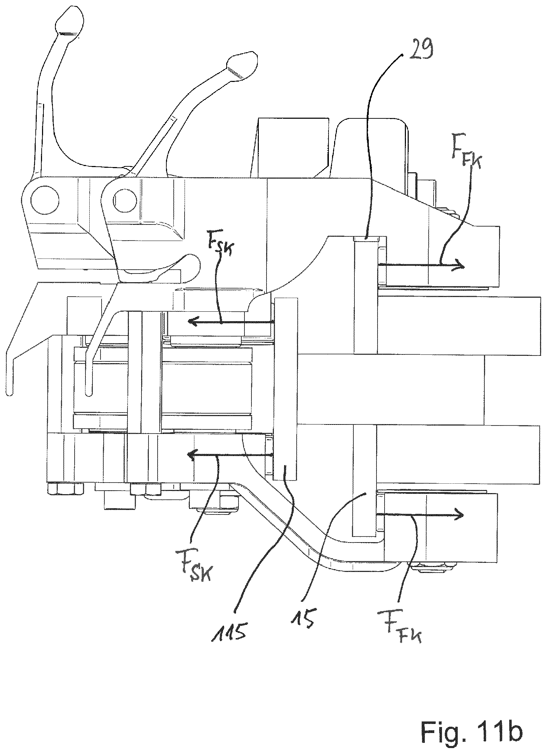

Nachfolgend wird anhand der Figuren 11a und 11b auf die weitere Ausgestaltung der Erfindung und auf die Kräfteverhältnisse und die Abstützung der Kluppentransporteinheiten KT an der Führungsschiene 15 eingegangen.

Aus den bisherigen Darstellungen ergibt sich auch, dass die Anordnung der Laufrollen bevorzugt symmetrisch zum Ketteninnenglied 35 verläuft, also bevorzugt symmetrisch zur Hülse 35 bzw., sofern vorgesehen zur Schonrolle 36 bzw. zu dem die beiden jeweiligen Verbindungslaschen 33 oder 33a durchsetzenden Bolzen 37 (siehe dazu auch Figur 5 bis 7b). Dazu ist in Figur 11a eine Mittel- oder Ketten-Symmetrieebene KSE eingezeichnet, die mittig zwischen den jeweils oberen und unteren Laufrollenpaar 27 des Führungsliedes FG bzw. Führungskluppen FK verlaufend angeordnet ist, also letztlich parallel zur Ebene des Filmes F.

Durch eine derartige symmetrische Anordnung zu den Ketteninnengliedern können also die hohen Kräfte, die im Rahmen der Relaxierung in Maschinenlängsrichtung (MD-Richtung) auftreten, möglichst gleichmäßig auf die Laufrollen 27, 31, also auf die Führungsrollen 27 und die Steuerrollen 31 verteilt werden. Dadurch lässt sich auch die Lebensdauer dieser Laufrollen maximieren.

In Figur 11a ist die entsprechende Kettensymmetrieebene KSE eingezeichnet, die mittig durch die Verschwenkachse 38, also mittig durch den Bolzen 37 oder die Hülse 35 des betreffenden Kettengliedes verläuft, so dass die höherliegenden Steuerrollen 31 in einem gleichen Abstand X oberhalb der Kettensymmetrieebene KSE auf der Lauffläche 15a abrollen, der dem Abstand X entspricht, mit welchem die unterhalb der Kettensymmetrieebene KSE vorgesehenen weiteren Steuerrollen 31 angeordnet sind.

Das Gleiche gilt auch für den Abstand Y, mit dem einmal oberhalb der Kettensymmetrieebene die oberen Führungsrollen 27 und die in dem gleichen Abstand Y unterhalb der Kettensymmetrieebene KSE angeordneten weiteren Führungsrollen 27 auf der rückseitigen Lauffläche 15b der Führungsschiene 15 abrollen.

Mit anderen Worten sollen die erwähnten Laufrollen 27, 31 so angeordnet werden, dass sie die Kräfte abstützen können, die durch das Auslenken des Steuergliedes SG bewirkt werden, wenn die zugehörigen Steuerrollen auf der Steuerschiene 115 auflaufen. Bei einer Auslenkung des Steuergliedes SG in Richtung Film (wenn also die Steuerrollen 31 auf die Steuerschienenfläche 115a der Steuerschiene 115 auflaufen, wie beispielsweise anhand von Figur 9 und 10 gezeigt ist) werden die Steuerrollen 31 in Richtung Film belastet. Die Kräfte, die auf die Führungsrollen 27 des Führungsgliedes FG und damit auf die Führungskluppen FK wirken, sind in der Darstellung gemäß Figur 11b als F_{FK} dargestellt, wobei die in entgegengesetzter Richtung auf die Steuerrollen 31 wirkende Kräfte in Figur 11b mit F_{SK} eingezeichnet sind.

Die Steuerrollen 31 können z.B. an dem Steuerglied SG befestigt sein,wenn eine durchgängige Transportkette 3a zum Einsatz kommt, wie dies anhand von Figur 7a und 7b erläutert ist. Die Steuerrollen 31 können aber auch an der Steuerkluppe SK selbst befestigt und verankert sein, wie dies beispielsweise bei der rückseitigen schematischen Darstellung gemäß Figur 6 gezeigt ist. Die Kräfte, die auf die Laufrollen wirken, die durch die Auslenkung der erwähnten Steuerglieder entstehen, sind für die Steuer- und die Führungsglieder gleich hoch. Diese Kräfte sind dabei abhängig von den in das Transportsystem 3 insgesamt eingeleiteten Zugkräften und den Relaxierungswerten in Maschinenlängsrichtung.

Für eine optimale Kräfteverteilung sollten die Steuer- und Führungsglieder SG, FG eine gleiche Anzahl an Steuer- und Führungs-Laufrollen aufweisen (bei einer gleichen Tragzahl). Eine geringere Anzahl könnte durch eine höhere Tragzahl ausgeglichen werden. Dies würde bedeuten, dass ein größerer Durchmesser (z.B. 1,5 x bis 2 x so groß) eingesetzt werden müsste, und zwar bei einer damit einhergehenden Verbreiterung der Laufrollen. Dies würde in Teilungsrichtung keinen größeren Platzbedarf benötigen (es wäre ein doppelter Durchmesser zu berücksichtigen, der mit der halben Anzahl multipliziert werden müsste). Allerdings würde sich eine derartige Ausführungsform negativ auf die Bautiefe und Bauhöhe der gesamten Anlage auswirken. Dadurch würden auch die Kluppen selbst größer werden bzw. in Tiefenrichtung einen größeren Bauraum beanspruchen, insgesamt somit also mehr Platz benötigen. Zusätzlich würde die Flächenpressung am Außenring zur Rollschiene nur unterproportional zu kleineren Krümmungen abnehmen.

Da das Steuerglied SG bei der Auslenkung annähernd parallel zum Führungsglied verbleibt (weder die Führungsglieder noch die Steuerglieder werden um eine Achse parallel zu den Laufflächen 15a, 15b verschwenkt), sind die Platzverhältnisse für die Steuer- und Führungsglieder gleich, um die zugehörigen Laufräder an den entsprechenden Stellen vorzusehen.

Da die erwähnten Laufrollen 27, 31 nur an den Steuer- und Führungsgliedern SG/FG befestigt sind und die Verbindungsglieder VG selbst keine Laufräder haben, kann der Platz von den Verbindungsgliedern VG mit genutzt werden.

Somit ergibt sich im Rahmen eines bevorzugten Ausführungsbeispieles, dass die Anzahl der mit den Steuergliedern SG über die Steuerschiene 115 lageveränderlichen Steuerrollen 31 zur Anzahl der nicht in Querrichtung zur Führungsschiene lageveränderlichen Führungsrollen 27 an den Führungsgliedern FG ein Verhältnis von 4 : 4 ergibt, also ein Verhältnis von 1 : 1.

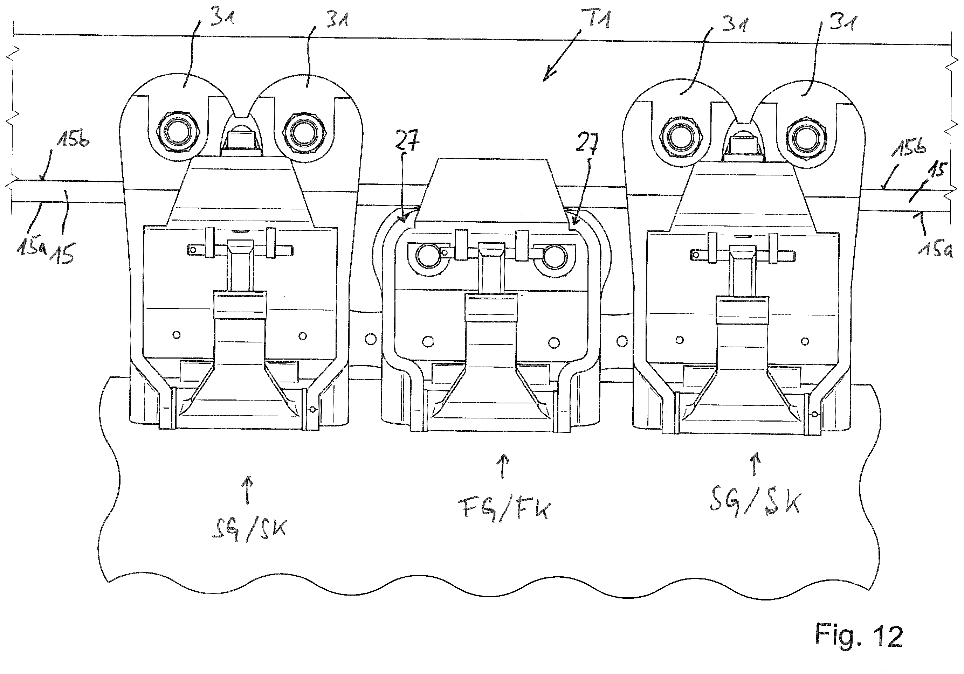

Anhand der schematischen Draufsicht gemäß Figur 12 ist in Abwandlung zu dem bisherigen Ausführungsbeispiel, d.h. insbesondere in Abwandlung zu Figur 9, gezeigt, dass die Steuerschiene 115 mit ihrer filmseitigen Steuerschienenfläche 115a nicht zwingend auf der Filmseite, also näherliegend zum Film angeordnet sein muss als die Führungsschiene 15 bzw. deren film- oder einspannseitige Führungsschienenfläche 15a.

Bei der Variante gemäß Figur 12 ist dargestellt, dass eine entsprechende Steuerschiene 115 auf der zur Film- oder Einspannseite abgewandt liegenden Seite der Führungsschiene 15 vorgesehen ist. In diesem Falle würde der funktionelle Aufbau der Führungsglieder FG sowie der zugehörigen Führungskluppen FK und der Steuerglieder SG auch in Form der Steuerkluppen SK die umgekehrte Funktion und Ausgestaltung annehmen.

Bei der abgewandelten Ausführungsform gemäß Figur 12, bei der die Lage der Führungsschiene 15 und der Steuerschiene 115 genau umgekehrt ist zu dem bisherigen Ausführungsbeispiel auch der Aufbau und die Funktion der Kluppentransporteinheiten KT einmal in Form der Führungskluppe FK und der Steuerkluppe SK quasi umgekehrt zu den bisherigen Ausführungsbeispielen.

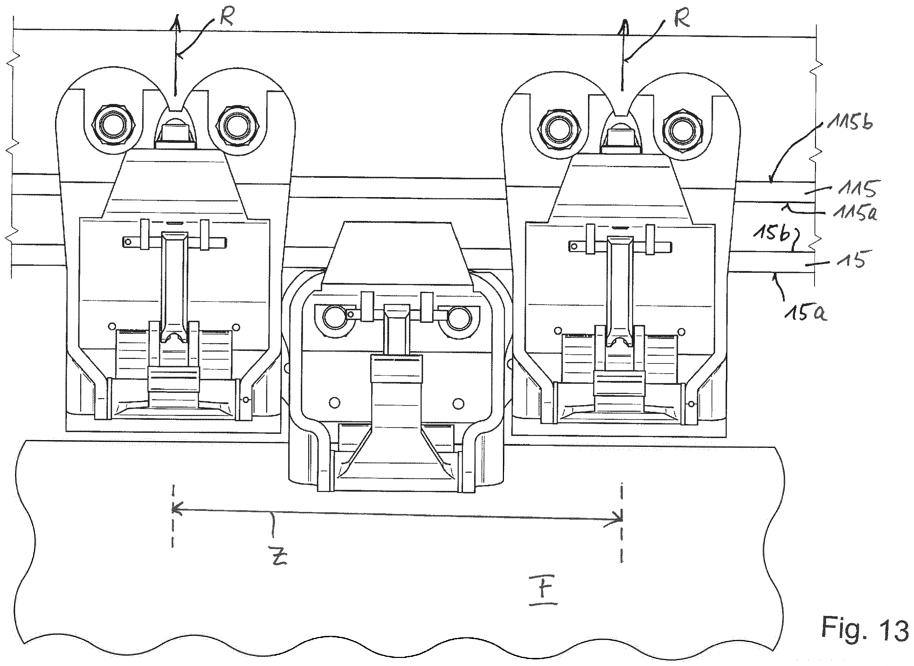

Die entsprechenden Verhältnisse sind dabei nachfolgend anhand der erwähnten Figur 12 sowie der Figur 13 wiedergegeben.

Figur 12 zeigt dabei die Darstellung der Führungskluppen FK und der Steuerkluppen SK auf der zumindest einen ersten Teilstrecke T1, die also ohne Steuerschiene 115 ausgestaltet ist. In diesem Falle würden also die Führungsrollen 27 des Führungsgliedes FG und damit der Führungskluppe FK entsprechend der in Figur 12 gezeigten Ausgestaltung und Anordnung auf der film- oder einspannseitigen Lauffläche 15a der Führungsschiene 15 abrollen, wohingegen die Steuerrollen 31 auf der rückseitigen Lauffläche 15b der Führungsschiene 15 abrollen. Würde sich dann aus der rückseitigen Lauffläche 15b der Führungsschiene 15 eine Steuerschiene 115 mit einer rückseitigen Steuerschienenfläche 115b im Abstand zur rückseitigen Führungsschienenfläche 15b erheben, so würde dann das so ausgebildete Steuerglied SG bzw. die so ausgebildete Steuerkluppe SK in entgegengesetzter Richtung zu dem bisherigen Ausführungsbeispiel von dem Film weg in rückseitiger Richtung R (s. Figur 13) verstellt werden, wie dies anhand der Draufsicht gemäß Figur 13 verdeutlicht ist.

Von daher entspricht der grundsätzliche Aufbau der Führungskluppe FK bei der Variante gemäß Figuren 12 und 13 einem Aufbau, wie er bei dem vorhergehenden Ausführungsbeispiel mit umgekehrt angeordneter Führungsschiene und Steuerschiene bezüglich der Steuerkluppe SK beschrieben wurde. Ebenso entspricht der Aufbau der Steuerkluppe SK bei der Variante gemäß Figuren 12 und 13 bei der umgekehrt angeordneten Führungsschiene 15 und Steuerschiene 115 grundsätzlich dem Aufbau, wie er anhand der Führungskluppe FK bei dem vorhergehenden Ausführungsbeispiel erläutert wurde.

Bei einer derartigen Variante würde die Gewichtsrolle 29 bevorzugt ebenfalls in dem Führungsglied FG, also der Führungskluppe FK untergebracht sein, um die Transportanordnung bzw. Transportkette an der Führungsschiene abzustützen und zu tragen. Denn das jeweils quer zur Führungsschiene verschiebbare Steuerglied SG wird bevorzugt ohne eine derartige Gewichtsrolle 29 ausgestattet. Da allerdings die Steuerkluppen SK bei der Variante gemäß Figuren 12 und 13 sich über die Führungsschienen 15 hinweg erstrecken, kann es sich gleichwohl aus Gewichts-Ausgleichsgründen als günstig erweisen, wenn diese Steuerkluppen zumindest zusätzlich zu den Führungskluppen FK oder alternativ zu den Führungskluppen FK nur alleine mit einer oder mehreren Gewichtsrollen 29 ausgestattet sind.

Grundsätzlich wird an dieser Stelle angemerkt, dass eine oder mehrere Gewichtsrollen 29 grundsätzlich nur an den Führungsgliedern FG oder Führungskluppen FK oder alternativ dazu nur an den Steuergliedern SG oder Steuerkluppen SK vorgesehen sein können. Schließlich ist es aber auch möglich, dass eine oder mehrere Gewichtsrollen 29 sowohl an den Führungsgliedern FG bzw. den Führungskluppen FK als auch an den Steuergliedern SG bzw. den Steuerkluppen SK vorgesehen sind.

Grundsätzlich ist eine Relaxierung unter Querverstellung des erläuterten Steuerungsgliedes SG an allen Positionenumlaufstrecken der Reckanlage möglich, also insbesondere überall da, wo neben der Führungsschiene 15 auch noch eine Steuerschiene vorgesehen sein kann.

Vorteilhafterweise soll die Relaxierung vom Anfang einer Weiterheizzone bis zum Auslauf erfolgen.

Eine derartige in Maschinenlängsrichtung durchgeführte Relaxierung kann dabei unabhängig von einer optionalen TD-Relaxierung durchgeführt werden, also zu einer optionalen in Querrichtung zur Abzugsrichtung 1 verlaufenden Relaxation, die wie im Stand der Technik bekannt dadurch bewirkt werden kann, dass der Abstand zwischen den beiden seitlich zum Film verlaufenden Führungsschienen 15 im gewünschten Maß verringert wird.

Die Relaxierung kann im Rahmen der Erfindung beispielsweise zwischen 1% bis 10% erfolgen (dies ist in Figur 17 unten rechts angedeutet). Diese Relaxierung kann je nach Bedarf eingestellt werden. Das Relaxierungsmaß, also der Abstand D beispielsweise zwischen zwei aufeinanderfolgende Führungsglieder FG, ist beispielsweise in Figur 8 und Figur 9 eingezeichnet.

Geht man beispielsweise von einem Teilungsmaß Z in der Größenordnung von 240 mm aus, weil dieses Teilungs- oder Abstandsmaß zwischen zwei aufeinanderfolgenden Führungsgliedern FG einer Relaxierung von 0% entspricht (wenn also zwischen zwei aufeinanderfolgenden Führungsgliedern das dazwischen befindliche Steuerglied S gemeinsam auf der Führungsschiene abrollt und die jeweils zugehörigen Verbindungsglieder VG sich in ihrer maximalen Längserstreckung befinden), so ergeben sich beispielsweise folgende Teilungsmaß-Werte Z für Relaxierungen zwischen 0% und 10% gemäß nachfolgender Tabelle:

| Relaxierung [%] | Teilungsmaß Z [mm] |
|---|---|
| 0 | 240 |
| 1 | 237,6 |
| 2 | 235,2 |
| 3 | 232,8 |
| 4 | 230,4 |
| 5 | 228 |
| 6 | 225,6 |
| 7 | 223,2 |
| 8 | 220,8 |
| 9 | 218,4 |
| 10 | 216 |

### Öffnen der Messerklappen vor der Relaxierung in Maschinenlängsrichtung

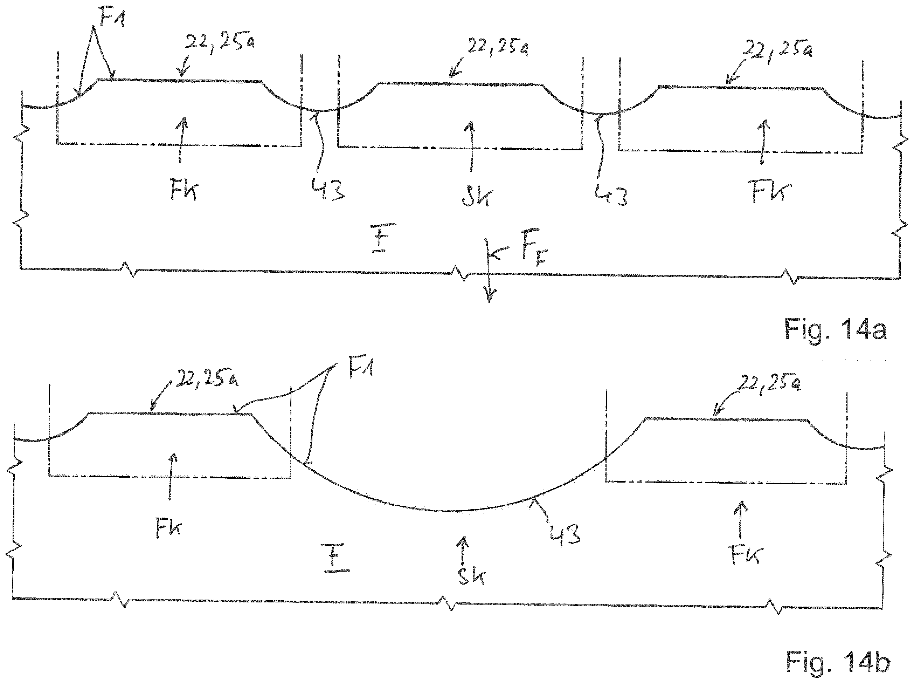

Wie erwähnt sind auf den Führungs- und auf den Steuerkluppen FK, SK Greif- oder Klemmvorrichtungen 22 in Form der erwähnten Kluppenhebel oder Messerklappen 25a vorgesehen, die um den Filmrand greifen um den Film durch die Anlage bewegen zu können. Beim Verstrecken des Films soll die freie Länge zwischen den Kluppenhebeln oder Messerklappen 25a klein sein, damit der Film möglichst über die komplette Randlänge gehalten wird und damit der Krafteintrag durch das Verstrecken möglichst gleichmäßig in den Film hinein erfolgt. Dies ist schematisch anhand von Figur 14a wiedergegeben, wobei dort neben dem Film F noch der Filmrand F1 eingezeichnet ist. An dem einen in Figur 14 gezeigten Filmrand F1 sind aufeinanderfolgend ein Kluppenhebel bzw. eine Messerklappe 25a angedeutet, die zu einem Führungsglied FG/Führungskluppe FK gehören, gefolgt von einem Kluppenhebel 25a, welcher an einem Steuerglied SG/Steuerkluppe SK vorgesehen ist, auf die dann wiederum ein Kluppenhebel 25a eingezeichnet ist, der zu einer nächsten Führungskluppe FK gehört.

Zwischen den aufeinanderfolgenden Kluppentransporteinheiten KT wird jeweils ein geringer Einsprung 43 erzeugt, da aufgrund der im Film immanenten Kräfte F_{F} der Film versucht sich entgegen der Reck- und Haltekräfte zusammen zu ziehen.

Die Einsprünge 43 des Films F zwischen den Kluppen und Kluppenhebeln 25a sollen dabei möglichst klein sein, da dies den Randstreifenanteil beeinflusst. Denn der Randstreifen ist durch eine nicht gleichmäßige oder eben ungleichmäßige Verstreckung des Films gekennzeichnet. Dieser Randstreifen muss dann letztlich als Ausschuss abgeschnitten und bevorzugt recycelt werden.

Damit also der Film F beim Relaxieren durch die Greifbereiche am Filmrand F1 nicht behindert wird, erfolgt das Öffnen jeder zweiten oder n-ten Messerklappe 25a bevorzugt vor dem Relaxieren.

Anhand von Figur 14b ist im Gegensatz zu Figur 14a jene Situation dargestellt, bei welcher die Klemmeinrichtung 22 der Steuerkluppen SK geöffnet wurde, so dass der Filmrand F1 nur durch die Führungskluppen FK festgehalten wird. Obgleich der Abstand zwischen zwei aufeinander folgenden Führungskluppen FK durch diese Maßnahme kleiner wird (was ebenfalls durch Vergleich von Figur 14a und 14b zu ersehen ist), wird gleichzeitig der zwischen den beiden Klemmeinrichtungen 22 zweier benachbarter Führungskluppen FK gebildete Einsprung 43 des Filmrandes F1 nunmehr deutlich größer.

Werden Steuerglieder SG und damit die Steuerkluppen SK beim Auflaufen auf die Steuerschiene 115 in Richtung Film lageverändert (so wie anhand der Ausführungsbeispiele nach Figuren 1 bis 11b dargestellt ist), so kann die zugehörige Messerklappe 25a der Klemmeinrichtung 22 auch erst nach dem Beginn der Relaxierung geöffnet werden, also auch erst nach der Lageveränderung der betreffenden Steuerkluppe SK in Querrichtung zu den Führungskluppen FK. Denn durch die Bewegung der Steuerkluppe und damit der zugehörigen Messerklappe in Richtung Film wird die Messerklappe 25a vor dem Öffnen von den Quer-Filmkräften (TD-Filmkräften) entlastet, wobei die Kraftüberleitung an die Messerklappen, die nicht geöffnet werden, langsamer erfolgt als beim Öffnen unter voller Last.

Sollte, wie anhand der Figuren 12 und 13 erläutert, das Steuerglied SG und damit die Steuerkluppe SK zur Bewirkung einer Abstandsverkürzung zwischen den Führungsgliedern FG vom Film weg verfahren und verstellt werden, empfiehlt sich ein Öffnen der Messerklappen 25a auf diesen Steuerklappen wenn möglich spätestens bei der Verstellbewegung der Steuerglieder oder zumindest kurzzeitig nach Beginn dieser Verstellbewegung in Querrichtung zur Führungsschiene und damit in Querrichtung von den Führungskluppen weg.

Aus der Erläuterung ergibt sich somit, dass zu der Bewirkung einer Abstandsverkürzung zwischen zwei aufeinanderfolgenden Führungsgliedern FG oder Führungskluppen FK die auf diesen Gliedern oder Kluppen sitzenden Messerklappen 25a geöffnet werden sollen (oder müssen), wohingegen die Messerklappen 25a auf den Führungsgliedern FG bzw. Führungskluppen FK geschlossen bleiben.

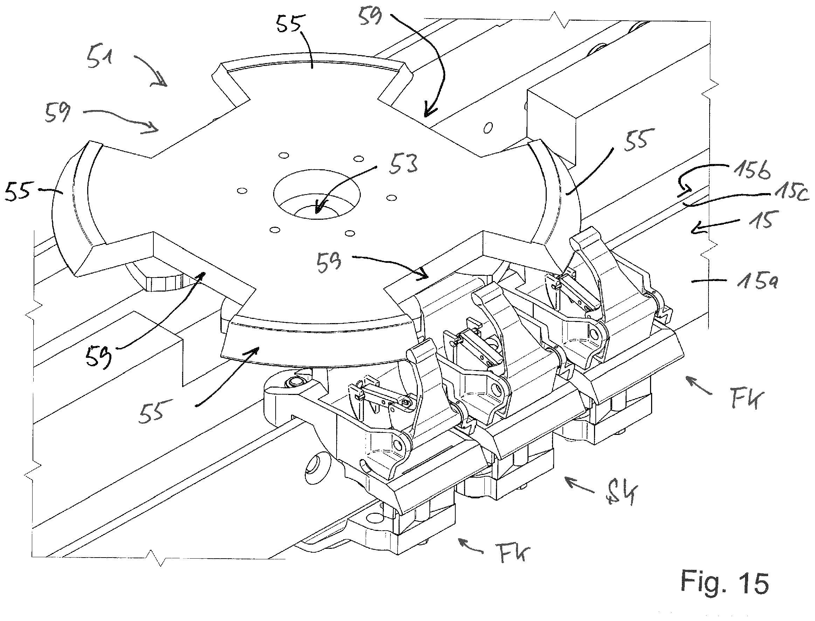

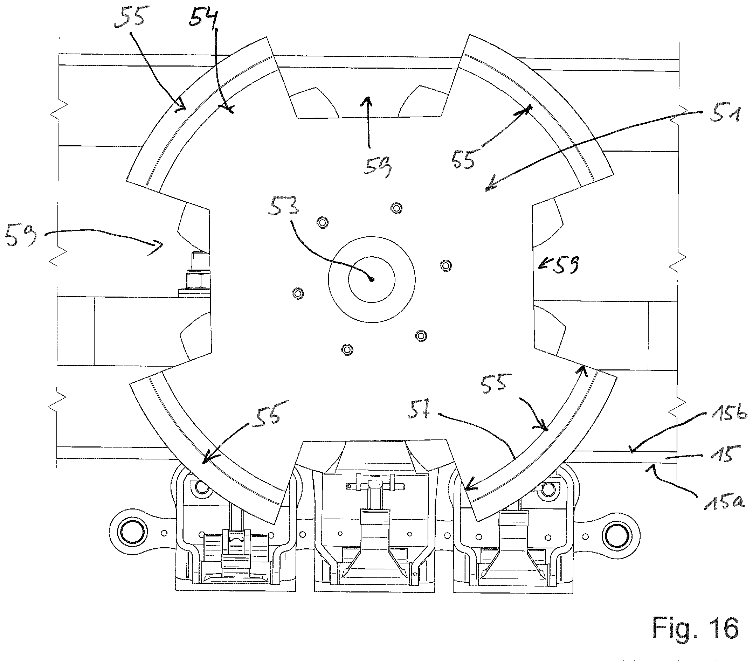

Dies kann beispielsweise mit einem anhand von Figuren 15 und 16 ausschnittweise gezeigten Öffnerrad 51 erfolgen, welches um eine Radachse 53 parallel zu den Laufflächen 15a, 15b der Führungsschiene 15 und/oder parallel zur Steuerschienenfläche 115a der Steuerschiene 115 ausgerichtet ist. Dieses Öffnerrad 51 weist einen Zahnkranz 54 mit radial vorstehenden Öffnerflanken 55 auf, die sich nur um ein bestimmtes Winkelmaß in Umlaufrichtung erstrecken, also nur eine bestimmte Öffnerflanken-Breite 57 aufweisen. Zwischen zwei derart gebildeten und in Umlaufrichtung versetzt liegenden Öffnerflanken 55 ist jeweils eine Zahnausnehmung 59 am Umfangsrand des Öffnerrades 51 ausgebildet. Dies hat zur Folge, dass bei entsprechend abgestimmter Drehbewegung des Öffnerrades 51 im Hinblick auf die vorbeifahrenden Kluppentransportelemente KT sichergestellt werden kann, dass beispielsweise nur jeder zweite Kluppenhebel auf einer Kluppentransporteinheit geöffnet wird, und zwar zielgerichtet jeweils jene Kluppenhebel oder Messerklappen 25a, die auf den Steuergliedern SG und damit den Steuerkluppen SK angeordnet sind. Die Messerklappen, die auf den Führungsgliedern FG und damit den Führungskluppen FK vorgesehen sind, bleiben z.B. geschlossen.

Alternativ wäre es auch möglich, die entsprechenden Messerklappen auf den Steuergliedern SG beispielsweise mit Magnetkraft zu öffnen, indem an der gewünschten Öffnungsposition entweder ein magnetisches Öffnerrad oder Magnete angebracht sind. Indem nur jede zweite Messerklappe geöffnet wird (also nur jene auf den Steuergliedern SG), dafür müssen die Messerklappen aus nicht magnetischem und magnetischem Werkstoff gefertigt werden, so dass sie unterschiedlich auf die Magnetkraft ansprechen.

Eine weitere Alternative wäre eine abweichende Messerklappen-Hebelstellung bzw. Messerklappen-Hebellänge. Dies würde es ermöglichen, die länger ausgebildeten Messerklappen auf den Steuergliedern SG (die über die auf niedrigerer Höhe bereits endenden Messerklappen 25a auf den Führungsgliedern FG überstehen) mittels einer Öffnungsschiene zu öffnen, wenn nämlich die überstehenden Enden der Messerklappen 25a z.B. auf der Öffnungsschiene anschlagen oder mittels Magnetkraft sanfter geöffnet werden.

Eine weitere Alternative wäre z.B., dass das Öffnerrad 51 derart ausgebildet ist, dass die Öffnerflanken 55 nur die jeweils zu öffnenden Messerklappen 25a erreichen und damit öffnen können. Die nicht erreichbaren Öffnerklappen würden dann geschlossen bleiben.

Wird eine derartige Öffnungsbewegung durchgeführt, so wird der Filmrand nur noch über die Messerklappen auf den Führungskluppen FK gehalten, so dass es zu einem etwas größerem Einsprung 43' an Filmrand F1 kommt, wie dies strichliert in Figur 14 eingezeichnet ist, wobei dann ferner noch zu berücksichtigen wäre, dass der Abstand zweier aufeinanderfolgender Messerklappen, die den Filmrand F1 noch halten, durch die bewirkte Abstandsverkürzung verringert wird.

Bezug nehmend auf Figur 17 ist in schematischer Draufsicht eine Querreckanlage gezeigt, bei der die Position eines Relaxierungs-Öffnerrades 51 mit durchgezogener Linie sowie die zwei Alternativpositionen P1 und P2 eines Relaxierungs-Öffnerrades in strichlierter Weise dargestellt sind. Am Ende der Reckanlage ist ein Kluppen-Öffnerrad an einer Position P3 dargestellt, welches dann auch noch die bis dahin geschlossenen Messerklappen auf den Führungskluppen FK öffnet, um den gereckten Film beispielsweise auf eine Abzugseinrichtung und dann auf eine Wicklerstation zu übergeben.

Die Position des Öffnerrades 51 vor bzw. am Anfang der Relaxierung in Maschinenlängsrichtung kann also variabel an die gewünschten Relaxierungsprofile in Maschinenlängsrichtung angepasst werden.

Beträgt der Teilungsabstand der Messerklappen z.B. 120 mm und die Messerklappenbreite beispielsweise 60 mm, so ergibt sich eine freie Länge von 50%. Wird jede zweite Messerklappe geöffnet, ergibt sich eine freie Länge von 75% beim MD-Relaxieren, also beim Relaxieren in Maschinenlängsrichtung. Das Verhältnis der beiden freien Längen wird immer größer, je breiter die Messerklappe wird.

### Einstellmöglichkeiten für die Steuerschienen

Es gibt verschiedene Möglichkeiten zur Einstellung der MD-Relaxierung und zur Einstellung einer optimalen Transportsystem- oder Kettenspannung durch Verkürzung der Gesamtlänge des Transportsystems oder der Transportkette.

Für eine bestimmte fest einzustellende MD-Relaxierung könnte eine entsprechende Schienenkontur in der Fertigung festgelegt werden. So könnte die Steuerschiene im Längsrelaxierungsbereich (MD-Relaxierungsbereich) in der Lauflänge gegebenenfalls aus gestückelten massiven, bevorzugt einstückigen Bauteilen bestehen, deren Kontur die Steuerschienenfläche 115a (oder 115b) für die Steuerrollen 31 vorgibt. Durch die entsprechende Formgebung und Bemaßung (Abstand der Steuerschienenfläche 115a bzw. 115b zur zugehörigen Lauffläche 15a bzw. 15b der Führungsschiene) ergibt sich eine fest vorgegebene MD-Relaxierung, die nicht verstellbar ist. Gegebenenfalls könnte eine so fest vorgegebene Kontur einer Steuerschiene von der Führungsschiene ausgebaut und durch eine andere Steuerschiene ersetzt werden, die eine andere Länge und/oder Bemaßung aufweist, um zu anderen Relaxierungswerten in MD-Richtung zu gelangen.

Ferner ist aber auch ein halbflexibles MD-Relaxierungsprofil möglich, bei dem die Steuerschiene aus mehreren Schienen oder Bändern geschichtet aufgebaut ist. Diese könnten abschnittsweise ausgetauscht werden, um den Abstand zwischen den Laufflächen der Führungsschiene und den Laufflächen der Steuerschiene flexibel zu gestalten.

Abweichend davon wäre auch ein halb-flexibles MD-Relaxierungssystem möglich, wenn beispielsweise eine entsprechende Steuerschiene auf einer Führungsschiene aufgeschraubt, aufgesteckt oder anderweitig miteinander verbunden wird. Dies hätte den Vorteil, dass das Einstellen der MD-Relaxierung nur den Tausch der Steuerschiene bedürfte.

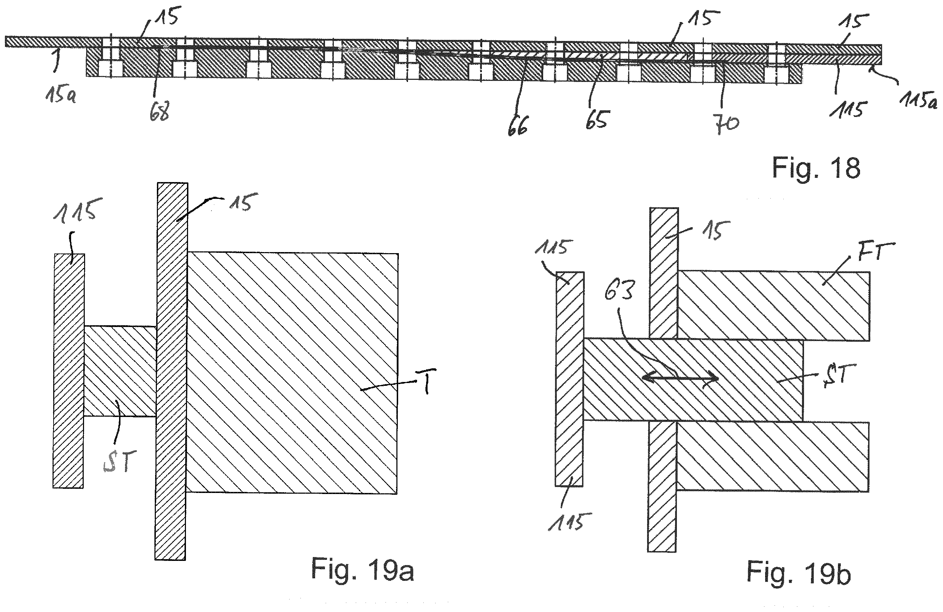

Ein grundsätzlicher Aufbau und Übergang in Form einer Rampe von einer Führungsschiene zu einer Steuerschiene ist beispielsweise im schematischen Querschnitt anhand von Figur 18 wiedergegeben. Zwischen der Führungsschiene und der Steuerschiene wird hier ein Distanzkeil 65 verwendet, wobei eine Deckleiste 66 zwischen zwei stufenförmigen Absätzen 68, 70 einmal in der Führungsschienenfläche 15a und der Steuerschienenfläche 115a eingesetzt ist, so dass ein stufenfreier Übergang von der einen Führungsschienenfläche zu der Steuerschienenfläche möglich ist.

Ein fester Anbau einer Steuerschiene 115 an eine Führungsschiene 15ist in Querschnittsdarstellung schematisch in Figur 19a wiedergegeben. Dabei ist bei der Variante gemäß Figur 19a die Führungsschiene 15 über einen Steuerschienenträger ST an der Führungsschiene 15 befestigt, wobei die Führungsschiene 15 wiederrum an einem Träger oder einer Trageinrichtung T montiert ist. Dabei kann die Führungsschiene 115 und/oder deren Steuerschienenträger ST beispielsweise an der Führungsschiene 15 oder direkt an einem Träger T auf unterschiedlichste Weise angebracht werden, beispielsweise aufgeschraubt, gesteckt, durch Klemmen angebracht etc.. Gegebenenfalls ist auch durch Austausch des Führungsschienenträgers oder unterschiedliche Einstellung ein unterschiedlicher Abstand zwischen der Führungsschiene 15 und der Steuerschiene 115 möglich.

Im Gegensetz zu Figur 19a zeigt Figur 19b eine Variante, bei der die Steuerschiene 115 mit dem zugehörigen Steuerschienenträger ST mittels eines Steckmechanismus an der Führungsschiene 15 und/oder dem zugehörigen Führungsschienenträger FT gehalten ist, vorzugsweise verstellbar gehalten ist.

Bei der Variante gemäß Figur 19b ist also die Steuerschiene 115 unabhängig und variabel gegenüber der Führungsschiene 15 montierbar und verankerbar und bevorzugt auswechselbar oder verstellbar, und zwar entsprechend der Doppelpfeildarstellung 63. In diesem Falle dient die Führungsschiene 15 weiterhin für die Gewichtsunterstützung und die Gewichtsaufnahme des Transportsystems. Ferner ist die erwähnte Steuerschiene 115 vorgesehen, die bevorzugt keine Gewichtskraft des Transportsystems aufnimmt aber gleichwohl durch zusätzlich vorsehbare Gewichtsrollen diese aufnehmen könnte. Hierbei wird, wie geschildert, die Abstandsverkürzung der Kluppentransporteinheiten KT bewirkt, bei der ein Teil des Transportsystems (der Transportkette) ausgelenkt wird, damit einzelne Transportglieder wie beispielsweise die Steuerglieder SG nicht mehr colliniar stehen und damit die Verkürzung in Maschinenlängsrichtung des Abstandes zwischen den einzelnen Transportkluppeneinheiten KT und damit der Gesamtlänge des Transportsystems bewirkt wird.

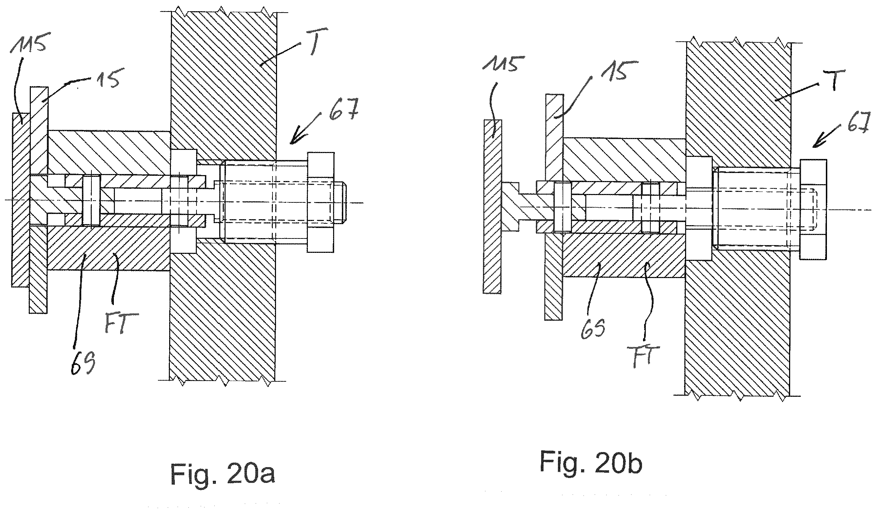

Anhand von Figur 20 ist in schematischer Querschnittsdarstellung gezeigt, wie über eine Schraubeinrichtung 67, die beispielsweise mit einem die Steuerschiene 115 tragenden Halteelement 69 verbunden ist, zusammenwirkt. Das in Figur 20 dargestellte Schraubelement 67 ist mit dem Halteelement 69 in Schub- und Zugrichtung verbunden, so dass das Schraubelement 67 in den Träger T unterschiedlich weit ein- oder herausgeschraubt werden kann, wodurch die Steuerschiene 115 unterschiedlich weit von der Führungsschiene 15 entfernt oder an die Führungsschiene herangeführt wird, wie sich dies aus dem Vergleich zwischen Figur 20a und 20b ergibt.

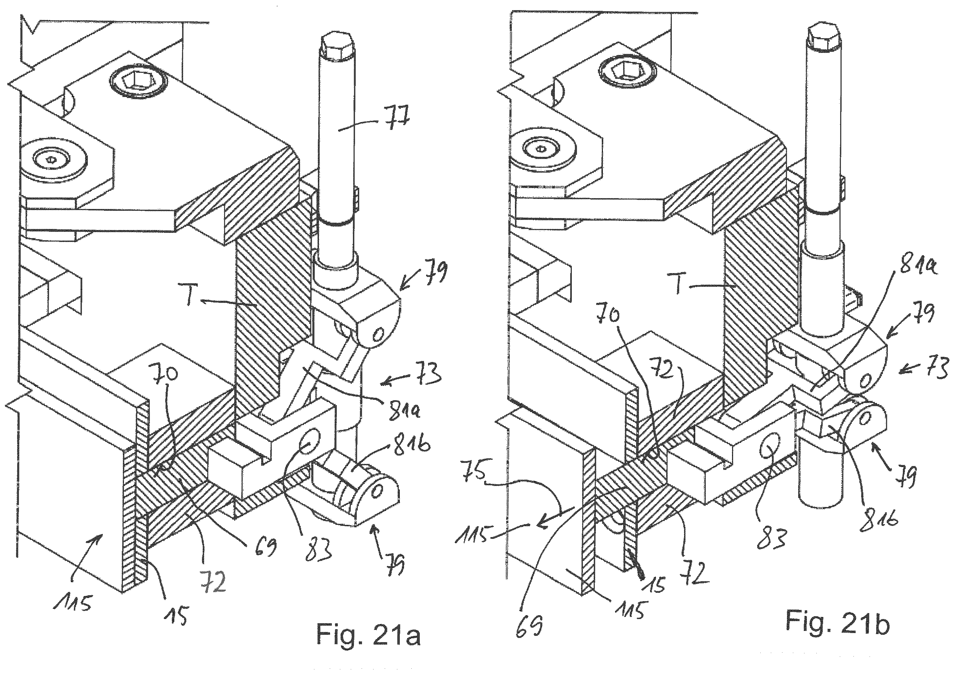

Anhand der Figuren 21a bis 21d ist ein abgewandeltes System, ein Verstellmechanismus 73 für eine Steuerschiene gezeigt.

Auch bei dieser Variante ist der Träger T mit Träger-verbindungsabschnitten 72 mit der Rückseite einer Führungsschiene 15 verbunden, worüber die Führungsschiene 15 durchgängig oder abschnittsweise gehalten ist. Die Verbindungsabschnitte 72 sind von einem axial darin verschieblichen Halteelement 69 durchsetzt, an dessen überstehendem Ende die verstellbare Steuerschiene 115 befestigt ist. Das Halteelement 69 ist in der entsprechenden Ausnehmung 70 in den Träger-Verbindungsabschnitten 72 axial verschieblich, um die Steuerschienen 115 wieder an die Führungsschiene heran oder von dieser weg zu verstellen.

Die Verstellbewegung entsprechend des Pfeiles 75 erfolgt über eine im gezeigten Ausführungsbeispiel vertikal verlaufende Führung 77 (beispielsweise in Form eines Führungsbolzens), längs derer zwei Basisabschnitte 79 beispielsweise motorisch aufeinander zu oder voneinander weg bewegt werden können. Von diesem Basisabschnitt 79 geht jeweils ein Hebel 81a bzw. 81b aus, die in Richtung der Schienen zu einer gemeinsamen Gelenkverbindung 83 führen, die wiederum mit dem quer zu den Schienen verlaufenden Halteelement 69 verbunden sind.

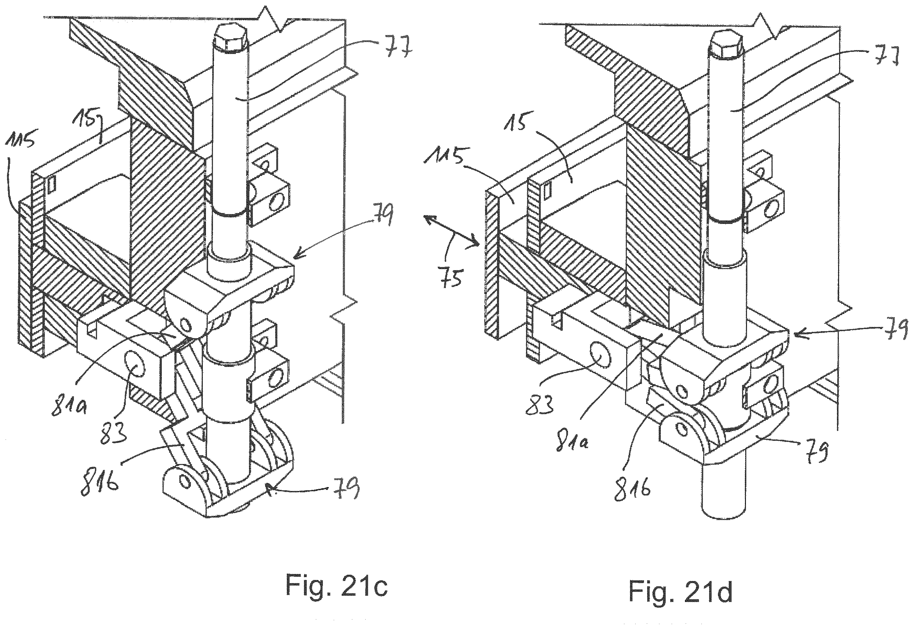

Werden die beiden Basisabschnitte 79 aufeinander zu bewegt, so bewegt sich die Gelenkverbindung 83 in Richtung Führungsschiene 15 und schiebt dabei die Steuerschiene 115 weiter von der Führungsschiene weg. Werden die beiden Basisabschnitte 79 längs der Führung 77 voneinander weg bewegt, wird die Steuerschiene 115 wieder an die Führungsschiene 15 heranbewegt. Dabei ist in Figur 21a und 21c die Situation gezeigt, bei der die Steuerschiene 115 an die Führungsschiene 15 heran verfahren ist, wohingegen bei der Darstellung in Figur 21b und 21d die Situation gezeigt ist, in welcher die Steuerschiene 115 in einer beabstandeten Position gegenüber der Führungsschiene 15 verstellt worden ist. Dabei sind die Figuren 21a und 21b in einer Darstellung und in Figur 21c und 21d in einer dazu um 90° verdrehten Position wiedergegeben.

### Einstellung einer optimalen Transportsystem- oder Kettenspannung

Eine optimale Kettenspannung wird durch das "Verkürzen" der Kette erreicht, dies ist nötig (und entsprechend vorteilhaft) bei festen Umlaufgeometrien. Durch das Verkürzen der Kette wird erreicht, dass die nötige Kettenspannung aufgebracht wird, ohne dass sich die Umlaufgeometrie (Rollschienenlaufbahn) in der Gesamtlänge ändern muss. Speziell bei geschlossenen Umlaufgeometrien entfallen die speziellen Bauteile für den Längenausgleich. Vorteilhaft ist diese Kettenspannvorrichtung für Rollenkettensysteme bei denen die Führungsbahnen für die Laufrollen durchgehend sind und damit die längenvariablen Bauteile sehr aufwendig sind. Auch kann damit eine Schwachstelle in der Umlaufgeometrie (Geteilte Führungsbahn für Laufrolle; Kantenlauf) auf ein Minimum reduziert werden. Auch kann die zwei oder dreiteilige verschiebbare Grundgeometrie, die sehr hohen Steifigkeitsanforderungen unterliegt, als einfache starre Grundkonstruktion ausgeführt werden.

Normalerweise erfolgt eine Kettenspannung durch Längenänderung der Umlaufgeometrie. Die hier beschriebene Lösung zur Verkürzung der Kette wird dadurch erreicht, dass die Kettenglieder abweichend von der gestreckten Stellung (max. Kettenlänge stellt sich durch Kettenzug ein) gezwungen werden eine "Zik-Zak Stellung" einzunehmen. Bei der oben beschriebenen Erfindung eines Transportsystems mit MD-Relaxierungsfunktion kann ein Teil des MD-Relaxierungsbreiches zur Vergrößerung des Kettenspannweges benutzt werden. Wird die MD-Relaxierungsfunktion auf ein Minimum verfahren, kann die Kette im kürzesten Zustand geschlossen werden. Wird die MD-Relaxierungsfunktion auf Arbeitsstellung gefahren, wird dadurch bereits eine Kürzung der Kette und damit ein Spannungsaufbau erreicht. Die restliche Kürzung der Kette erfolgt dann mit der eigentlichen Spannvorrichtung.

Allgemein bedarf die Verkürzung der Kette durch eine Zik-Zak Stellung einer Ausführung der Kette mit Laufrollen, die beidseits der Führungsschiene angeordnet sind. Zusätzlich muss die Position der Laufrollen alternierend links und rechts von der Führungsschiene erfolgen. Damit kann durch eine Verbreiterung der Rollenschiene der Abstand der Laufrollen vergrößert werden, was zur Folge hat, dass die Kettenglieder nicht mehr collinear stehen und damit eine Verkürzung der Kette bewirken. Die Verbreiterung der Rollenschiene kann durch das Auslenken eines Teiles einer zweiteiligen (bzw. mehrteiligen) Führungsschiene erreicht werden. Die Auslenkung kann wie bereits weiter oben beschrieben erfolgen oder mit einem Hydraulikzylinder. Ziel ist es eine konstante Kettenspannung zu erreichen. Die Kettenspannung ist eine Funktion der Zylinderkraft und des Auslenkwinkels der Kettenglieder. Da sich die Auslenkung der Kettenglieder in Abhängigkeit des Längenverhältnisses der Kette zur Führungsbahn einstellt ist der Auslenkwinkel variabel. Damit müsste sich die Zylinderkraft in Abhängigkeit des Auslenkwinkels verändern. Bei einer speziellen Anordnung des Zylinders kann die Zylinderkraft konstant gewählt werden, unabhängig von der Auslenkungsstellung der Ketteglieder.

Aus dem geschilderten Aufbau der Reckanlage und den zugehörigen Elementen ist also ersichtlich
- dass im Rahmen der Erfindung unter Verwendung der beschriebenen Führungskluppen, Steuerkluppen und Verbindungsgliedern in optimaler Weise eine Längs-Relaxation bei einer Querreckanlage oder insbesondere einer Querreckstufe der sequentiellen Reckanlage in gewünschten Bereichen einstellbar ist, insbesondere in einer Auslauf- und sogenannten Relaxationszone, und/oder
- dass alternativ oder kumulativ eine gewünschte Spannung in dem Transportsystem verändert oder eingestellt werden kann, und zwar unabhängig davon, ob die Führungskluppen und die Steuerkluppen mit entsprechenden Kettengliedern einer endlosen Kette verbunden sind, oder ob keine endlose Kette verwendet wird und die Führungskluppen und Steuerkluppen lediglich über einzelne gelenkige Verbindungselemente miteinander verbunden sind.

Die Ausführungsbeispiele sind jeweils unter Verwendung von Laufrollen, d.h. Führungsrollen, Steuerrollen und Gewichtsrollen beschrieben. Bei Bedarf können anstelle der Rollen insgesamt aber auch Gleitelemente eingesetzt werden. Mit anderen Worten könnten also anstelle der Führungsrollen auch Führungsgleitelemente 27 bei den Führungskluppen FK und anstelle der Steuerrollen Steuergleitelemente 31 bei den Steuerkluppen SK eingesetzt werden. Ebenso sind auch gemischte Systeme möglich, die teilweise mit Rollen und teilweise mit Gleitelementen arbeiten, die an den entsprechenden Gleitflächen auf der Führungsschiene und/oder der Steuerschiene gleitend längs bewegt werden.

Abschließend wird angemerkt, dass sich die erfindungsgemäß Reckanlage unter anderem durch folgende, gegebenenfalls zusätzliche Merkmale auszeichnet, nämlich
- die Führungskluppen (FK) weisen zumindest ein oberes und ein unteres Paar von Führungsrollen (27) oder Führungsgleitelementen und/oder die Steuerkluppen (SK) zumindest ein oberes und ein unteres Paar von Steuerrollen (31) oder Steuergleitelementen auf, die zu einer die Kettenglieder-Achsen oder -Bolzen (37) mittig durchsetzenden Kettensymmetrieebene (KSE) nach oben und nach unten versetzt liegen, vorzugsweise in einem gleichen Abstand zur Kettensymmetrieebene (KSE) oder um weniger als 10% davon abweichen, und/oder
- die Öffnungsvorrichtung ist derart ausgebildet, dass die Kluppenhebel (25a) jeder Steuerkluppe (SK) oder jeder n-ten Steuerkluppe geöffnet werden, wobei n eine natürliche Zahl > 1 ist,
   und/oder
- zwischen zwei in Umlaufrichtung (4) aufeinander folgenden Steuerkluppen (SK) sind entweder zumindest eine Führungskluppe (FK) oder m Führungskluppen (FK) angeordnet, wobei m eine natürliche Zahl > 1 ist, und/oder
- die Abstandseinstell- oder Verstelleinrichtung (73) umfasst eine Gewindeeinrichtung (67),
   und/oder
- der Schienenträger enthält im Bereich seiner Ausnehmung ein rechts- oder linksgängiges Gewinde, in welches ein Doppelgewindebolzen eingeschraubt ist, wobei der Doppelgewindebolzen ein zweites Gewinde in Form eines links- oder rechtsgängigen Innengewindes aufweist und ferner ein Links- oder Rechtsgewindebolzen gelenkig mit der Steuerschiene (115) derart verbunden ist, dass bei Drehen des Doppelgewindebolzen der Abstand zwischen Steuerschiene (115) und der Führungsschiene (15) veränderbar ist.

## Patentansprüche

1. Reckanlage, insbesondere Quer- oder sequentielle Reckanlage mit einer Längsreck- und einer Querreckstufe, mit folgenden Merkmalen:
- mit zwei umlaufenden Führungsbahnen (2), die mit Seitenversatz quer zu einer Abzugsrichtung (1) eines zu reckenden Filmes (F) angeordnet sind,
- längs der beiden Führungsbahnen (2) ist jeweils ein umlaufendes Transportsystem (3) mit einer Vielzahl von Kluppentransporteinheiten (KT) angeordnet, mittels denen ein zu reckender Film (F) seitlich erfassbar und durch die Querreckanlage oder Querreckstufe von einer Einlaufzone (EZ) zu einer Auslaufzone (AZ) hindurchbewegbar ist,
- auf den Kluppentransporteinheiten (KT) ist zumindest eine Klemmeinrichtung vorgesehen, worüber ein Filmrand (F1) eines zu reckenden Filmes (F) festklemmbar ist,
- die umlaufende Führungsbahn (2) umfasst eine Führungsschienen-Anordnung (FA), längs der die Kluppentransporteinheiten (KT) mittels Laufrollen (27, 31, 29) und/oder Gleitelementen abgestützt verfahrbar sind,
**gekennzeichnet durch** die folgenden weiteren Merkmale:
- die Kluppentransporteinheiten (KT) umfassen Führungskluppen (FK) und Steuerkluppen (SK), wobei sowohl die Führungskluppen (FK) als auch die Steuerkluppen (SK) jeweils mit zumindest einer Klemmeinrichtung versehen sind,
- zumindest zwei in Umlaufrichtung (4) des Transportsystems (3) aufeinander folgende Führungskluppen (FK) sind unter Zwischenschaltung einer Steuerkluppe (SK) oder zumindest zwei aufeinander folgende Steuerkluppen (SK) sind unter Zwischenschaltung einer Führungskluppe (FK) derart miteinander verbunden, dass die Führungskluppe (FK) über ein Verbindungsglied (VG) gelenkig mit der benachbarten Steuerkluppe (SK) verbunden ist,
- die Führungsschienen-Anordnung (FA) umfasst auf zumindest einer ersten Teilstrecke (T1) eine Führungsschiene (15) mit zumindest einer zugehörigen Führungsschienenfläche (15a, 15b, 15c, 15d),
- die Führungsschienen-Anordnung (FA) umfasst auf zumindest einer zweiten Teilstrecke (T2) neben der Führungsschiene (15) zusätzlich eine Steuerschiene (115) und/oder eine Steuerschienenfläche (115a, 115b), die gegenüber der Führungsschiene (15) oder der zumindest einen Führungsschienenfläche (15a, 15b, 15c, 15d) beabstandet angeordnet ist,
- die Führungskluppen (FK) sind längs der zumindest einen ersten und der zumindest einen zweiten Teilstrecke (T1, T2) der Führungsschiene (15) verfahrbar, wozu die Führungskluppen (FK) mit der Führungsschiene (15) oder der zumindest einen Führungsschienenfläche (15a, 15b, 15c, 15d) in Eingriff stehen,
- die Steuerkluppen (SK) sind auf der zumindest einen ersten Teilstrecke (T1) längs der Führungsschiene (15) verfahrbar und stehen im Bereich der zumindest einen zweiten Teilstrecke (T2) mit der zugehörigen Steuerschiene (115) oder der zugehörigen Steuerschienenfläche (115a, 115b) derart in Eingriff, dass die Steuerkluppen (SK) mit den ihnen zugeordneten Klemmeinrichtungen mit Seitenversatz zur Führungsschiene (15) sowie mit Seitenversatz zu den Führungskluppen (FK) verstellt sind, so dass im Bereich der zumindest einen zweiten Teilstrecke die die Führungskluppen (FK) und die Steuerkluppen (SK) gelenkig verbindenden Verbindungsglieder (VG) unter Verkürzung des Abstandes zwischen einer Führungskluppe (FK) und einer benachbarten Steuerkluppe (SK) und damit unter Verkürzung des Abstandes zwischen zwei aufeinander folgenden Führungskluppen (FK) verschwenkt sind.

2. Reckanlage nach Anspruch 1, **gekennzeichnet durch** die folgenden Merkmale:
- die Führungsschiene (15) umfasst eine filmseitige Führungsschienenfläche (15a) und eine demgegenüber abgewandte rückseitige Führungsschienenfläche (15b),
- die Führungskluppen (FK) umfassen Führungsrollen (27) oder Führungsgleitelemente,
- die Führungsrollen (27) oder die Führungsgleitelemente der Führungskluppen (FK) stehen zumindest mit der rückseitigen Führungsschienenfläche (15b) oder ausschließlich nur mit der rückseitigen Führungsschienenfläche (15b) in Eingriff,
- die Steuerkluppen (SK) umfassen Steuerrollen (31) oder Steuergleitelemente, und
- die Steuerrollen (31) oder die Steuergleitelemente der Steuerkluppen (SK) stehen auf der zumindest einen zweiten Teilstrecke (T2) mit der filmseitig ausgerichteten Steuerschienenfläche (115a) oder ausschließlich nur mit der filmseitig ausgerichteten Steuerschienenfläche (115a) und auf der ersten Teilstrecke (T1) mit der filmseitigen Führungsschienenfläche (15a) oder ausschließlich nur mit der filmseitigen Führungsschienenfläche (15a) in Eingriff.

3. Reckanlage nach Anspruch 1, **gekennzeichnet durch** die folgenden Merkmale:
- die Führungsschiene (15) umfasst eine filmseitige Führungsschienenfläche (15a) und eine demgegenüber abgewandte rückseitige Führungsschienenfläche (15b),
- die Führungskluppen (FK) umfassen Führungsrollen (27) oder Führungsgleitelemente,
- die Führungsrollen (27) oder die Führungsgleitelemente der Führungskluppen (FK) stehen zumindest mit der filmseitigen Führungsschienenfläche (15a) oder ausschließlich nur mit der filmseitigen Führungsschienenfläche (15a) in Eingriff,
- die Steuerkluppen (SK) umfassen Steuerrollen (31) oder Steuergleitelemente, und
- die Steuerrollen (31) oder die Steuergleitelemente der Steuerkluppen (SK) stehen auf der zumindest einen zweiten Teilstrecke (T2) mit der rückseitigen Steuerschienenfläche (115b) oder ausschließlich nur mit der rückseitigen Steuerschienenfläche (115b) und auf der ersten Teilstrecke (T1) mit der rückseitigen Führungsschienenfläche (15b) oder ausschließlich nur mit der rückseitigen Führungsschienenfläche (15b) in Eingriff.

4. Reckanlage nach Anspruch 1 oder 2, **dadurch gekennzeichnet, dass** das Transportsystem (3) abwechselnd Führungskluppen (FK) gefolgt von Steuerkluppen (SK) umfasst, wobei jeweils eine Führungskluppe (FK) mit einer vor- oder nachlaufenden Steuerkluppe (SK) über ein Verbindungsglied (VG) vorzugsweise in Form eines Kettengliedes gelenkig verbunden ist.

5. Reckanlage nach Anspruch 4, **dadurch gekennzeichnet, dass** das Verbindungsglied (VG) einen vor- und nachlaufenden Bolzen (37) umfasst, wobei einer der beiden Bolzen (37) an der Führungskluppe (FK) und der andere Bolzen (37) an der Steuerkluppe (SK) verankert und gehalten ist, so dass das Verbindungsglied (VG) um die den Bolzen (37) zentral durchsetzende Verschwenkachse und relativ zur Führungskluppe (FK) und zur Steuerkluppe (SK) verschwenkbar ist.

6. Reckanlage nach einem der Ansprüche 1 bis 5, **dadurch gekennzeichnet, dass** das Transportsystem (3) aus einer umlaufenden Transportkette (3a) besteht, wobei die jeweils vier aufeinander folgenden Kettenglieder ein Führungsglied (FG), ein Verbindungsglied (VG), Steuerglied (SG) und ein weiteres Verbindungsglied (VG) bilden, wobei das Führungsglied (FG) mit einer Führungskluppe (FK) und das jeweilige Steuerglied (SG) mit einer Steuerkluppe (SK) derart verbunden ist, dass das Führungsglied (FG) über das Verbindungsglied (VG) mit dem Steuerglied (SG) gelenkig verbunden ist.

7. Reckanlage nach einem der Ansprüche 1 bis 6, **dadurch gekennzeichnet, dass** alle Ketten- oder Verbindungsglieder (VG) und/oder Führungsglieder (FG) und/oder Steuerglieder (SG) gleich ausgebildet sind.

8. Reckanlage nach einem der Ansprüche 2 bis 7, **dadurch gekennzeichnet, dass** zumindest die Führungsrollen (27) und/oder Führungsgleitelemente der Führungskluppen (FK) so angeordnet sind, dass zumindest eine oder mehrere der Führungsrollen (27) und/oder Führungsgleitelemente mit der dem zu reckenden Film (F) zugewandt liegenden Führungsschienenfläche (15a) und eine oder mehrere der Führungsrollen (27) und/oder Führungsgleitelemente mit der rückseitigen Führungsschienenfläche (15b) in Eingriff stehen.

9. Reckanlage nach einem der Ansprüche 1 bis 8, **dadurch gekennzeichnet, dass** die Führungskluppen (FK) zumindest eine Gewichtslaufrolle (29) oder zumindest ein Gewichtsgleitelement aufweisen, worüber die Führungskluppe (FK) über eine nach oben weisende Führungsfläche (15c) zu der Führungsschiene (15) abgestützt und gehalten ist, und dass die Steuerkluppen (SK)
a) mit zumindest einer Gewichtslaufrolle (29) oder zumindest einem Gewichtsgleitelement
oder
b) ohne eine Gewichtslaufrolle (29) oder ohne einem Gewichtsgleitelement ausgestaltet und über eine zur Steuerkluppe (SK) vor- und nachlaufende Führungskluppe (FK) gehalten ist.

10. Reckanlage nach einem der Ansprüche 1 bis 9, **dadurch gekennzeichnet, dass** die Führungskluppen (FK) in Umlaufrichtung (4) zumindest zwei versetzt liegende Führungsrollen (27) oder Führungsgleitelemente und/oder die Steuerkluppen (SK) in Umlaufrichtung 4 zumindest zwei versetzt liegende Steuerrollen (31) oder Steuergleitelemente aufweisen.

11. Reckanlage nach einem der Ansprüche 1 bis 10, **gekennzeichnet durch** die folgenden Merkmale:
- die Führungsrollen (27) oder die Führungsgleitelemente sind an den Führungskluppen (FK) oder an den Führungsgliedern (FG) gehalten, an denen eine Führungskluppen (FK) befestigt ist, oder
- die Steuerrollen (31) oder die Steuergleitelemente sind an den Steuerkluppen (SK) oder an den Steuergliedern (SG) gehalten, an denen die jeweilige Steuerkluppe (SK) befestigt ist.

12. Reckanlage nach einem der Ansprüche 1 bis 11, **gekennzeichnet durch** die folgenden Merkmale:
- die Steuerschiene (115) oder die Steuerschienenfläche (115a, 115b) ist so angeordnet, dass die jeweiligen Steuerkluppen (SK) in Querrichtung quer zur Führungsschiene (FK) in Richtung des zu reckenden Films verstellt werden, oder
- die Steuerschiene (115) oder die Steuerschienenfläche (115a, 115b) ist so angeordnet, dass die jeweiligen Steuerkluppen (SK) in Querrichtung quer zur Führungsschiene (FK) von dem zu reckenden Film (F) weg verstellt werden.

13. Reckanlage nach einem der Ansprüche 1 bis 12, **dadurch gekennzeichnet, dass** im Bereich der zweiten Teilstrecke (T2)
a) sowohl die Führungskluppen (FK) als auch die Steuerkluppen (SK) sich in ihrer Schließ- oder Klemmstellung befinden, oder
b) eine Öffnungsvorrichtung vorgesehen ist, worüber nur die auf den Steuerkluppen (SK) vorgesehenen Klemmeinrichtungen vorzugsweise selektiv von ihrer Schließ- oder Klemmstellung in ihre Öffnungs- oder Freigabestellung verstellbar oder verstellt sind.

14. Reckanlage nach Anspruch 13, **gekennzeichnet durch** die folgenden Merkmale:
- die jeweils eine Klemmeinrichtung auf den Führungskluppen (FK) und die zumindest eine Klemmeinrichtung auf den Steuerkluppen (SK) umfasst einen Kluppenhebel (25a), der zwischen einer Klemmstellung und einer Öffnungsstellung verschwenkbar ist,
- zur Verschwenkung der Kluppenhebel (25a) von ihrer Klemm- in ihre Freigabestellung ist eine Öffnungsvorrichtung vorgesehen, die vorzugsweise innerhalb einer Ofenanordnung angeordnet ist, durch die hindurch die umlaufende Transportbahn (2) hindurchgeführt ist, und
- die Öffnungsvorrichtung ist dazu ausgebildet, selektiv lediglich die Kluppenhebel (25a) der Steuerkluppen (SK) zu öffnen.

15. Reckanlage nach Anspruch 14, **gekennzeichnet durch** die folgenden Merkmale:
- der auf den Steuerkluppen (SK) vorgesehene zumindest eine Kluppenhebel (25a) oder das zumindest freie Kluppenhebelende besteht zumindest teilweise aus einem magnetischen Werkstoff oder umfasst einen magnetischen Werkstoff, wobei die Öffnungsvorrichtung dazu ausgebildet ist, die Kluppenhebel (25a) selektiv mittels der Magnetwirkung vorzugsweise berührungslos von ihrer Klemmstellung in ihre Freigabeposition zu verschwenken, oder
- die Öffnungsvorrichtung besteht aus einem mechanischen Öffnungsmechanismus, bei welchem die Kluppenhebel (25a), die auf den Steuerkluppen (SK) vorgesehen sind, mittels einer Anschlageinrichtung selektiv von ihrer Klemmposition in Freigabeposition verschwenkbar sind.

16. Reckanlage nach Anspruch 15, **gekennzeichnet durch** die folgenden Merkmale:
- die Öffnungsvorrichtung umfasst jeweils ein in sich um eine Radachse (53) drehendes Öffnerrad (51), welches einen Zahnkranz (54) mit Öffnerflanken (55) umfasst,
- das Öffnerrad (51) ist vorzugsweise im Bereich der Steuerschiene (115) oder im Übergangsbereich von der Führungsschiene (15) zur Steuerschiene (115) ausgebildet, angeordnet und/oder so eingestellt, dass die Zähne oder Öffnerflanken (55) des Zahnkranzes (54) ausschließlich in Eingriff mit dem Kluppenhebel (25a) der auf den Steuerkluppen (SK) angeordneten Kluppenhebel (25a) gelangt und diese von ihrer Klemmposition in ihre Freigabeposition verschwenken.

17. Reckanlage nach einem der Ansprüche 1 bis 16, **dadurch gekennzeichnet, dass** zwischen zwei in Umlaufrichtung (4) aufeinander folgenden Führungskluppen (FK) entweder zumindest eine Steuerkluppe (SK) oder p Steuerkluppen (SK) angeordnet sind, wobei p eine natürliche Zahl > 1 ist.

18. Reckanlage nach einem der vorherigen Ansprüche, **gekennzeichnet durch** die folgenden Merkmale:
- die beiden umlaufenden Führungsbahnen (2) umfassen jeweils einen Schienenträger (T),
- die Führungsschiene (15) und die Steuerschiene (115) bestehen aus einem gemeinsamen Schienenkörper, der an dem Schienenträger (47) befestigt ist,
oder
die Führungsschiene (15) ist einteilig aufgebaut und die Steuerschiene (115) ist einteilig aufgebaut und die Führungsschien (15) sowie die Steuerschiene (115) sind an dem Schienenträger (T) befestigt, oder
die Führungsschiene (15) und/oder die Steuerschiene (115) umfassen mehrere Schienenbänder, die geschichtet aufeinander angeordnet und aneinander befestigt sind und die sich entlang einer bestimmten Länge erstrecken;
oder
die Steuerschiene (115) ist lösbar auf die Führungsschiene (15) aufgesetzt, insbesondere aufgeschraubt und/oder aufgesteckt;
oder
ein Abstand zwischen der Steuerschiene (115) und der Führungsschiene (15) ist durch eine Abstandseinstell- oder Verstelleinrichtung (73) ohne Entfernung von der Führungsschiene (15) veränderbar;

19. Reckanlage nach Anspruch 18, **gekennzeichnet durch** die folgenden Merkmale:
- die Steuerschiene (115) und die Führungsschiene (15) umfassen beide einen Grundköper;
- der Grundkörper der Führungsschiene (15) ist am Schienenträger (T) befestigt;
- der Schienenträger (T) und der Grundkörper der Führungsschiene (15) umfassen eine Ausnehmung, durch die der Grundköper der Steuerschiene (115) zugänglich ist;
- die Abstandseinstell- oder Verstelleinrichtung (73) greift in diese Ausnehmung ein und ist mit dem Grundkörper der Steuerschiene (115) derart verbunden, dass Druck- und/oder Zugkräfte auf den Grundkörper der Steuerschiene (115) übertragbar sind, wodurch der Abstand zwischen der Steuerschiene (115) und der Führungsschiene (15) veränderbar ist.

20. Reckanlage nach Anspruch 19, **gekennzeichnet durch** das folgende Merkmal:
- die Abstandseinstell- oder Verstelleinrichtung (73) umfasst eine Hubspindel oder einen Hydraulikzylinder, der zumindest teilweise in der Ausnehmung angeordnet und zur Lageveränderung der Steuerschiene (115) relativ zur Führungsschiene (15) verbunden ist.

## Claims

1. Stretching system, in particular a transverse stretching system or a sequential stretching system comprising a longitudinal stretching stage and a transverse stretching stage, having the following features:
- comprising two circulating guide tracks (2) arranged having a lateral offset transversely with respect to a take-off direction (1) of a film (F) to be stretched,
- along the two guide tracks (2) there is a circulating conveyor system (3) having a plurality of clip conveyor units (KT), by means of which a film (F) to be stretched can be gripped at its sides and moved through the transverse stretching system or transverse stretching stage from an infeed zone (EZ) to a discharge zone (AZ),
- at least one clamping device is provided on the clip conveyor units (KT), by means of which device a film edge (F1) of a film (F) to be stretched can be clamped in place,
- the circulating guide track (2) comprises a guide rail arrangement (FA) along which the clip conveyor units (KT) can be moved in a supported manner by means of casters (27, 31, 29) and/or sliding elements,
**characterised by** the following additional features:
- the clip conveyor units (KT) comprise guide clips (FK) and control clips (SK), both the guide clips (FK) and the control clips (SK) being provided with at least one clamping device,
- either at least two guide clips (FK) that follow one another in the circulating direction (4) of the conveyor system (3) are interconnected by arranging a control clip (SK) therebetween, or at least two successive control clips (SK) are interconnected by arranging a guide clip (FK) therebetween, such that the guide clip (FK) is hinged to the adjacent control clip (SK) by means of a connection member (VG),
- over at least one first section (T1), the guide rail arrangement (FA) comprises a guide rail (15) having at least one associated guide rail surface (15a, 15b, 15c, 15d),
- over at least one second section (T2), the guide rail arrangement (FA) comprises, in addition to the guide rail (15), a control rail (115) and/or a control rail surface (115a, 115b) that is arranged at a spacing from the guide rail (15) or the at least one guide rail surface (15a, 15b, 15c, 15d),
- the guide clips (FK) can be moved along the at least one first section and the at least one second section (T1, T2) of the guide rail (15), for which purpose the guide clips (FK) are meshed with the guide rail (15) or the at least one guide rail surface (15a, 15b, 15c, 15d),
- the control clips (SK) can be moved along the guide rail (15) over the at least one first section (T1) and are meshed with the associated control rail (115) or the associated control rail surface (115a, 115b) in the region of the at least one second section (T2) such that the control clips (SK) and their associated clamping devices are moved at a lateral offset from both the guide rail (15) and the guide clips (FK), such that, in the region of the at least one second section, the connection members (VG) hinging together the guide clips (FK) and the control clips (SK) are pivoted, in the process reducing the distance between a guide clip (FK) and an adjacent control clip (SK) and thus reducing the distance between two successive guide clips (FK).

2. Stretching system according to claim 1, **characterised by** the following features:
- the guide rail (15) comprises a guide rail surface (15a) on the film side and a rear guide rail surface (15b) facing away therefrom,
- the guide clips (FK) comprise guide rollers (27) or sliding guide elements,
- the guide rollers (27) or the sliding guide elements of the guide clips (FK) are meshed either at least with the rear guide rail surface (15b) or only with the rear guide rail surface (15b),
- the control clips (SK) comprise control rollers (31) or sliding control elements, and
- over the at least one second section (T2), the control rollers (31) or the sliding control elements of the control clips (SK) are meshed with the control rail surface (115a) facing the film or only with the control rail surface (115a) facing the film, and, over the first section (T1), are meshed with the film-side guide rail surface (15a) or only with the film-side guide rail surface (15a).

3. Stretching system according to claim 1, **characterised by** the following features:
- the guide rail (15) comprises a guide rail surface (15a) on the film side and a rear guide rail surface (15b) facing away therefrom,
- the guide clips (FK) comprise guide rollers (27) or sliding guide elements,
- the guide rollers (27) or the sliding guide elements of the guide clips (FK) are meshed either at least with the film-side guide rail surface (15a) or only with the film-side guide rail surface (15a),
- the control clips (SK) comprise control rollers (31) or sliding control elements, and
- over the at least one second section (T2), the control rollers (31) or the sliding control elements of the control clips (SK) are meshed with the rear control rail surface (115b) or only with the rear control guide surface (115b), and, over the first section (T1), are meshed with the rear guide rail surface (15b) or only with the rear guide rail surface (15b).

4. Stretching system according to either claim 1 or claim 2, **characterised in that** the conveyor system (3) alternately comprises guide clips (FK) followed by control clips (SK), each guide clip (FK) being hinged to a leading or trailing control clip (SK) by means of a connection member (VG), preferably in the form of a chain link.

5. Stretching system according to claim 4, **characterised in that** the connection member (VG) comprises a leading and a trailing bolt (37), one of the two bolts (37) being anchored and held on the guide clip (FK) and the other bolt (37) being anchored and held on the control clip (SK) such that the connection member (VG) can be pivoted about the pivot pin passing centrally through the bolt (37) and relative to the guide clip (FK) and control clip (SK).

6. Stretching system according to any of claims 1 to 5, **characterised in that** the conveyor system (3) consists of a circulating conveyor chain (3a), each four successive chain links forming a guide member (FG), a connection member (VG), a control member (SG) and an additional connection member (VG), the guide member (FG) being connected to a guide clip (FK) and each control member (SG) being connected to a control clip (SK) such that the guide member (FG) is hinged to the control member (SG) by means of the connection member (VG).

7. Stretching system according to any of claims 1 to 6, **characterised in that** all chain links or connection members (VG) and/or guide members (FG) and/or control members (SG) are identical.

8. Stretching system according to any of claims 2 to 7, **characterised in that** at least the guide rollers (27) and/or sliding guide elements of the guide clips (FK) are arranged such that at least one or more of the guide rollers (27) and/or sliding guide elements is meshed with the guide rail surface (15a) facing the film (F) being stretched and one or more of the guide rollers (27) and/or sliding guide elements are meshed with the rear guide rail surface (15b).

9. Stretching system according to any of claims 1 to 8, **characterised in that** the guide clips (FK) comprise at least one weight roller (29) or at least one sliding weight element, by which the guide clip (FK) is supported and held with respect to the guide rail (15) by means of an upward-facing guide surface (15c), and **in that** the control clips (SK)
a) are designed having at least one weight roller (29) or at least one sliding weight element
or
b) are designed without a weight roller (29) or without a sliding weight element and are held by means of a guide clip (FK) that leads and trails the control clip (SK).

10. Stretching system according to any of claims 1 to 9, **characterised in that,** in the circulating direction (4), the guide clips (FK) comprise at least two offset guide rollers (27) or sliding guide elements and/or, in the circulating direction (4), the control clips (SK) comprise at least two offset control rollers (31) or sliding control elements.

11. Stretching system according to any of claims 1 to 10, **characterised by** the following features:
- the guide rollers (27) or the sliding guide elements are held on either the guide clips (FK) or the guide members (FG) to which a guide clip (FK) is fastened, or
- the control rollers (31) or the sliding control elements are held on either the control clips (SK) or the control members (SG) to which each control clip (SK) is fastened.

12. Stretching system according to any of claims 1 to 11, **characterised by** the following features:
- the control rail (115) or the control rail surface (115a, 115b) is arranged such that each control clip (SK) is moved in the transverse direction transversely with respect to the guide rail (FK) towards the film being stretched, or
- the control rail (115) or the control rail surface (115a, 115b) is arranged such that each control clip (SK) is moved in the transverse direction transversely with respect to the guide rail (FK) away from the film (F) being stretched.

13. Stretching system according to any of claims 1 to 12, **characterised in that,** in the region of the second section (T2),
a) both the guide clips (FK) and the control clips (SK) are in their closed or clamping position, or
b) an opening apparatus is provided, by means of which only the clamping devices provided on the control clips (SK) are or can be moved, preferably selectively, from their closed or clamping position into their open or releasing position.

14. Stretching system according to claim 13, **characterised by** the following features:
- the clamping device on each guide clip (FK) and the at least one clamping device on the control clips (SK) comprise a clip lever (25a) that can be pivoted between a clamping position and an open position,
- an opening apparatus, which is preferably provided within an oven arrangement through which the circulating conveyor track (2) is guided, is provided for pivoting the clip lever (25a) from its clamping position into its releasing position, and
- the opening apparatus is designed to selectively open only the clip levers (25a) of the control clips (SK) .

15. Stretching system according to claim 14, **characterised by** the following features:
- the at least one clip lever (25a) provided on the control clips (SK) or the at least free clip lever end consists at least in part of a magnetic material or comprises a magnetic material, the opening apparatus being designed to selectively pivot the clip levers (25a) from their clamping position into their releasing position preferably contactlessly by means of the magnetic action, or
- the opening apparatus consists of a mechanical opening mechanism in which the clip levers (25a) provided on the control clips (SK) can be selectively pivoted from their clamping position into their releasing position by means of a stop device.

16. Stretching system according to claim 15, **characterised by** the following features:
- each opening apparatus comprises an opener wheel (51) that rotates about a wheel axis (53) and comprises a gear rim (54) having opener flanks (55),
- the opener wheel (51) is preferably formed, arranged and/or positioned in the region of the control rail (115) or in the transition region from the guide rail (15) to the control rail (115) such that the teeth or opener flanks (55) of the gear rim (54) mesh only with the clip lever (25a) of the clip levers (25a) arranged on the control clips (SK) and pivot said levers from their clamping position into their releasing position.

17. Stretching system according to any of claims 1 to 16, **characterised in that** either at least one control clip (SK) or p control clips (SK) are arranged between two guide clips (FK) that follow one another in the circulating direction (4), p being a natural number > 1.

18. Stretching system according to any of the preceding claims, **characterised by** the following features:
- the two circulating guide tracks (2) each comprise a rail support (T),
- the guide rail (15) and the control rail (115) consist of a shared rail body fastened to the rail support (47),
or
the guide rail (15) is formed in one piece and the control rail (115) is formed in one piece and the guide rail (15) and the control rail (115) are fastened to the rail support (T),
or
the guide rail (15) and/or the control rail (115) comprise a plurality of rail belts that are layered one on top of the other, fastened to one another and extend over a particular length,
or
the control rail (115) is releasably placed, in particular screwed and/or mounted, on the guide rail (15),
or
a distance between the control rail (115) and the guide rail (15) can be adjusted by a distance setting or adjustment device (73) without removing the guide rail (15).

19. Stretching system according to claim 18, **characterised by** the following features:
- the control rail (115) and the guide rail (15) each comprise a main body;
- the main body of the guide rail (15) is fastened to the rail support (T);
- the rail support (T) and the main body of the guide rail (15) comprise a recess through which the main body of the control rail (115) can be accessed;
- the distance setting or adjustment device (73) is inserted into said recess and is connected to the main body of the control rail (115) such that compressive and/or tensile forces can be transmitted to the main body of the control rail (115), as a result of which the distance between the control rail (115) and the guide rail (15) can be altered.

20. Stretching system according to claim 19, **characterised by** the following feature:
- the distance setting or adjustment device (73) comprises a lifting spindle or a hydraulic cylinder that is arranged at least in part in the recess and is connected so as to alter the position of the control rail (115) relative to the guide rail (15).

## Revendications

1. Installation d'étirage, en particulier installation d'étirage transversal ou séquentiel ayant un étage d'étirage longitudinal et un étage d'étirage transversal, comprenant les éléments suivants :
- il est prévu deux voies de guidage (2) en recirculation qui sont agencées en décalage latéral transversalement à une direction d'extraction (1) d'un film à étirer (F),
- le long des deux voies de guidage (2) est prévu respectivement un système de transport (3) en recirculation pourvu d'une multitude d'unités de transport à pinces (KT) à l'aide desquelles un film à étirer (F) peut être saisi latéralement et déplacé à travers l'installation d'étirage transversal ou l'étage d'étirage transversal depuis une zone d'entrée (EZ) jusqu'à une zone de sortie (AZ),
- sur les unités de transport à pinces (KT) est prévu au moins un moyen de coincement permettant de coincer un bord (F1) d'un film à étirer (F),
- la voie de guidage (2) en recirculation comprend un ensemble de rails de guidage (FA) le long duquel les unités de transport à pinces (KT) sont mobiles en étant supportées à l'aide de galets roulants (27, 31, 29) et/ou d'éléments coulissants,
**caractérisée par** les autres éléments suivants :
- les unités de transport à pinces (KT) comprennent des pinces de guidage (FK) et des pinces de commande (SK), aussi bien les pinces de guidage (FK) que les pinces de commande (SK) étant pourvues chacune d'au moins un moyen de coincement,
- au moins deux pinces de guidage (FK) qui se suivent en direction de circulation (4) du système de transport (3) sont reliées l'une à l'autre avec interposition d'une pince de commande (SK), ou au moins deux des pinces de commande (SK) successives sont reliées l'une à l'autre avec interposition d'une pince de guidage (FK), de telle sorte que la pince de guidage (FK) est reliée en articulation à la pince de commande (SK) voisine par un organe de liaison (VG),
- sur au moins un premier trajet partiel (T1), l'ensemble de rails de guidage (FA) comprend un rail de guidage (15) ayant au moins une surface de rail de guidage associée (15a, 15b, 15c, 15d),
- sur au moins un second trajet partiel (T2), l'ensemble de rails de guidage (FA) comprend, outre le rail de guidage (15), en supplément un rail de commande (115) et/ou une surface de rail de commande (115a, 115b) qui est agencé(e) à distance par rapport au rail de guidage (15) ou à ladite au moins une surface de rail de guidage (15a, 15b, 15c, 15d),
- les pinces de guidage (FK) sont mobiles le long dudit au moins un premier et dudit au moins un second trajet partiel (T1, T2) du rail de guidage (15), ce pourquoi les pinces de guidage (FK) sont en engagement avec le rail de guidage (15) ou avec ladite au moins une surface de rail de guidage (15a, 15b, 15c, 15d),
- les pinces de commande (SK) sont mobiles sur ledit au moins un premier trajet partiel (T1) le long du rail de guidage (15) et sont en engagement avec le rail de commande associé (115) ou avec la surface de rail de commande associée (115a, 115b), au niveau dudit au moins un second trajet partiel (T2), de telle sorte que les pinces de commande (SK) sont déplacées avec les moyens de coincement qui leur sont associés, en décalage latéral par rapport au rail de guidage (15) et en décalage latéral par rapport aux pinces de guidage (FK), de sorte qu'au niveau dudit au moins un second trajet partiel, les organes de liaison (VG) qui relient en articulation les pinces de guidage (FK) et les pinces de commande (SK) sont basculés en raccourcissant la distance entre une pince de guidage (FK) et une pince de commande (SK) voisine et donc en raccourcissant la distance entre deux pinces de guidage (FK) successives.

2. Installation d'étirage selon la revendication 1,
**caractérisée par** les éléments suivants :
- le rail de guidage (15) comprend une surface de rail de guidage (15a) côté film et une surface de rail de guidage (15b) arrière détournée de celle-ci,
- les pinces de guidage (FK) comprennent des galets de guidage (27) ou des éléments coulissants de guidage,
- les galets de guidage (27) ou les éléments coulissants de guidage des pinces de guidage (FK) sont en engagement au moins avec la surface de rail de guidage (15b) arrière ou exclusivement seulement avec la surface de rail de guidage (15b) arrière,
- les pinces de commande (SK) comprennent des galets de commande (31) ou des éléments coulissants de commande, et
- les galets de commande (31) ou les éléments coulissants de commande des pinces de commande (SK) sont en engagement, sur ledit au moins un second trajet partiel (T2), avec la surface de rail de commande (115a) orientée du côté film ou exclusivement seulement avec la surface de rail de commande (115a) orientée du côté film, et sur le premier trajet partiel (T1) avec la surface de rail de guidage (15a) côté film ou exclusivement seulement avec la surface de rail de guidage (15a) côté film.

3. Installation d'étirage selon la revendication 1,
**caractérisée par** les éléments suivants :
- le rail de guidage (15) comprend une surface de rail de guidage (15a) côté film et une surface de rail de guidage (15b) arrière détournée de celle-ci,
- les pinces de guidage (FK) comprennent des galets de guidage (27) ou des éléments coulissants de guidage,
- les galets de guidage (27) ou les éléments coulissants de guidage des pinces de guidage (FK) sont en engagement au moins avec la surface de rail de guidage (15b) côté film ou exclusivement seulement avec la surface de rail de guidage (15b) côté film,
- les pinces de commande (SK) comprennent des galets de commande (31) ou des éléments coulissants de commande, et
- les galets de commande (31) ou les éléments coulissants de commande des pinces de commande (SK) sont en engagement, sur ledit au moins un second trajet partiel (T2), avec la surface de rail de commande (115b) arrière ou exclusivement seulement avec la surface de rail de commande (115b) arrière, et sur le premier trajet partiel (T1) avec la surface de rail de guidage (15b) arrière ou exclusivement seulement avec la surface de rail de guidage (15b) arrière.

4. Installation d'étirage selon la revendication 1 ou 2,
**caractérisée en ce que**
le système de transport (3) comprend en alternance des pinces de guidage (FK) suivies par des pinces de commande (SK), une pince de guidage (FK) étant reliée en articulation avec une pince de commande (SK) située en amont ou en aval via un organe de liaison (VG) de préférence sous la forme d'un maillon de chaîne.

5. Installation d'étirage selon la revendication 4,
**caractérisée en ce que**
l'organe de liaison (VG) comprend un boulon situé en amont et un boulon situé en aval (37), l'un des deux boulons (37) étant ancré et retenu sur la pince de guidage (FK) et l'autre boulon (37) étant ancré et retenu sur la pince de commande (SK), de sorte que l'organe de liaison (VG) est mobile en basculement autour de l'axe de basculement, traversant les boulons (37) au centre, par rapport à la pince de guidage (FK) et à la pince de commande (SK).

6. Installation d'étirage selon l'une des revendications 1 à 5,
**caractérisée en ce que**
le système de transport (3) est constitué d'une chaîne de transport (3a) en recirculation, et les quatre maillons de chaîne successifs constituent respectivement un organe de guidage (FG), un organe de liaison (VG), un organe de commande (SG) et un autre organe de liaison (VG), l'organe de guidage (FG) étant relié à une pince de guidage (FK) et l'organe de commande respectif (SG) étant relié à une pince de commande (SK), de telle sorte que l'organe de guidage (FG) est relié en articulation à l'organe de commande (SG) par l'organe de liaison (VG).

7. Installation d'étirage selon l'une des revendications 1 à 6,
**caractérisée en ce que**
tous les maillons de chaîne ou organes de liaison (VG) et/ou organes de guidage (FG) et/ou organes de commande (SG) sont réalisés identiques.

8. Installation d'étirage selon l'une des revendications 2 à 7,
**caractérisée en ce que**
au moins les galets de guidage (27) et/ou les éléments coulissants de guidage des pinces de guidage (FK) sont agencés de telle sorte qu'au moins un ou plusieurs des galets de guidage (27) et/ou éléments coulissants de guidage sont en engagement avec la surface de rail de guidage (15a) tournée vers le film à étirer (F) et qu'un ou plusieurs des galets de guidage (27) et/ou éléments coulissants de guidage sont en engagement avec la surface de rail de guidage (15b) arrière.

9. Installation d'étirage selon l'une des revendications 1 à 8,
**caractérisée en ce que**
les pinces de guidage (FK) comprennent au moins un galet roulant de lestage (29) ou au moins un élément coulissant de lestage par lequel la pince de guidage (FK) est soutenue et retenue par rapport au rail de guidage (15) par une surface de guidage (15c) dirigée vers le haut, et **en ce que** les pinces de commande (SK)
a) sont munies d'au moins un galet roulant de lestage (29) ou d'au moins un élément coulissant de lestage,
ou
b) sont dépourvues de galet roulant de lestage (29) ou d'élément coulissant de lestage et sont retenues par une pince de guidage située en amont et en aval par rapport à la pince de commande (SK).

10. Installation d'étirage selon l'une des revendications 1 à 9,
**caractérisée en ce que**
les pinces de guidage (FK) comprennent au moins deux galets de guidage (27) ou éléments coulissants de guidage situés en décalage en direction de circulation (4), et/ou
les pinces de commande (SK) comprennent au moins deux galets de commande (31) ou éléments coulissants de commande situés en décalage en direction de circulation (4).

11. Installation d'étirage selon l'une des revendications 1 à 10,
**caractérisée en ce que**
- les galets de guidage (27) ou les éléments coulissants de guidage sont retenus sur les pinces de guidage (FK) ou sur les organes de guidage (FG) auxquels est fixée une pince de guidage (FK), ou
- les galets de commande (SK) ou les éléments coulissants de commande sont retenus sur les pinces de commande (SK) ou sur les organes de commande (SG) auxquels est fixée la pince de commande (SK) respective.

12. Installation d'étirage selon l'une des revendications 1 à 11, **caractérisée par** les éléments suivants :
- le rail de commande (115) ou la surface de rail de commande (115a, 115b) est agencé(e) de telle sorte que les pinces de commande (SK) respectives sont déplacées en direction transversale transversalement au rail de guidage (FK) en direction du film à étirer, ou
- le rail de commande (115) ou la surface de rail de commande (115a, 115b) est agencé(e) de telle sorte que les pinces de commande (SK) respectives sont déplacées en direction transversale transversalement au rail de guidage (FK) en éloignement du film à étirer (F).

13. Installation d'étirage selon l'une des revendications 1 à 12, **caractérisée en ce que**
au niveau du second trajet partiel (T2)
a) aussi bien les pinces de guidage (FK) que les pinces de commande (SK) se trouvent dans leur position de fermeture ou de coincement, ou
b) il est prévu un dispositif d'ouverture par lequel uniquement les moyens de coincement prévus sur les pinces de commande (SK) sont déplaçables ou déplacées de préférence sélectivement depuis leur position de fermeture ou de coincement jusque dans leur position d'ouverture ou de libération.

14. Installation d'étirage selon la revendication 13,
**caractérisée par** les éléments suivants :
- ledit moyen de coincement respectif sur les pinces de guidage (FK) et ledit au moins un moyen de coincement sur les pinces de commande (SK) comprennent un levier de pince (25a) qui est mobile en basculement entre une position de coincement et une position d'ouverture,
- pour basculer les leviers de pince (25a) depuis leur position de coincement jusque dans leur position de libération, il est prévu un dispositif d'ouverture qui est agencé de préférence à l'intérieur d'un ensemble formant four à travers lequel est guidée la voie de transport (2) en recirculation, et
- le dispositif d'ouverture est réalisé pour ouvrir sélectivement uniquement les leviers de pince (25a) des pinces de commande (SK).

15. Installation d'étirage selon la revendication 14,
**caractérisée par** les éléments suivants :
- ledit au moins un levier de pince (25a) prévu sur les pinces de commande (SK) ou au moins l'extrémité libre du levier de pince est constitué(e) au moins partiellement en un matériau magnétique ou comprend un matériau magnétique, le dispositif d'ouverture étant réalisé pour basculer de préférence sans contact physique les leviers de pince (25a) sélectivement à l'aide de l'effet magnétique depuis leur position de coincement jusque dans leur position de libération, ou
- le dispositif d'ouverture est constitué par un mécanisme d'ouverture mécanique dans lequel les leviers de pince (25a) prévus sur les pinces de commande (SK) peuvent être basculés depuis leur position de coincement jusque dans la position de libération à l'aide d'un moyen de butée.

16. Installation d'étirage selon la revendication 15,
**caractérisée par** les éléments suivants :
- le dispositif d'ouverture comprend une roue d'ouverture (55) tournant autour d'un axe de roue (53) et comprenant une couronne dentée (54) à flancs d'ouverture (55),
- la roue d'ouverture (51) est réalisée, agencée et/ou réglée de préférence au niveau du rail de commande (115) ou dans la zone de transition depuis le rail de guidage (15) vers le rail de commande (115), de telle sorte que les dents ou flancs d'ouverture (55) de la couronne dentée (54) viennent en engagement exclusivement avec le levier de pince (25a) des leviers de pince (25a) agencés sur les pinces de commande (SK) et font basculer ceux-ci depuis leur position de coincement jusque dans leur position de libération.

17. Installation d'étirage selon l'une des revendications 1 à 16,
**caractérisée en ce que**
entre deux pinces de guidage (FK) qui se suivent en direction de circulation (4), il est prévu soit au moins une pince de commande (SK) soit p pinces de commande (SK), p étant un nombre naturel > 1.

18. Installation d'étirage selon l'une des revendications précédentes, **caractérisée par** les éléments suivants :
- les deux voies de guidage (2) en recirculation comprennent chacune un support de rail (T),
- le rail de guidage (15) et le rail de commande (115) sont constitués d'un corps de rail commun qui est fixé au support de rail (47),
ou
le rail de guidage (15) est conçu d'un seul tenant et le rail de commande (115) est conçu d'un seul tenant, et le rail de guidage (15) ainsi que le rail de commande (115) sont fixés au support de rail (T),
ou
le rail de guidage (15) et/ou le rail de commande (115) comprennent plusieurs bandes de rail qui sont agencées les unes sur les autres en étant empilées et qui sont fixées les unes aux autres et s'étendent le long d'une longueur déterminée ;
ou
le rail de commande (115) est posé de façon amovible sur le rail de guidage (15), en particulier par vissage et/ou par enfichage ;
ou
une distance entre le rail de commande (115) et le rail de guidage (15) est modifiable par un moyen de réglage de distance ou de déplacement (73) sans enlèvement depuis le rail de guidage (15).

19. Installation d'étirage selon la revendication 18,
**caractérisée par** les éléments suivants :
- le rail de commande (115) et le rail de guidage (15) comprennent tous les deux un corps de base ;
- le corps de base du rail de guidage (15) est fixé au support de rail (T) ;
- le support de rail (T) et le corps de base du rail de guidage (15) présentent un évidement par lequel le corps de base du rail de commande (115) est accessible ;
- le moyen de réglage de distance ou de déplacement (73) vient s'engager dans ledit évidement et est relié au corps de base du rail de commande (115) de telle sorte que des forces de compression et/ou de traction sont transmissibles au corps de base du rail de commande (115), moyennant quoi la distance entre le rail de commande (115) et le rail de guidage (15) est variable.

20. Installation d'étirage selon la revendication 19,
**caractérisée par** l'élément suivant :
- le moyen de réglage de distance ou de déplacement (73) comprend une broche de soulèvement ou un vérin hydraulique qui est agencé(e) au moins partiellement dans ledit évidement et est réalisé(e) pour modifier la position du rail de commande (115) par rapport au rail de guidage (15).
